# EUROPEAN PATENT SPECIFICATION

(11) **EP 1 654 055 B1**
(45) Date of publication and mention of the grant of the patent: **22.09.2010**
(21) Application number: 04768067.3
(22) Date of filing: 13.08.2004
(51) Int. Cl.: B01J 13/02, B01J 13/16, B01J 27/185

(54) **MICROENCAPSULATED CATALYST-LIGAND SYSTEM, METHODS OF PREPARATION AND METHODS OF USE THEREOF**
MIKROVERKAPSELTES KATALYSATOR-LIGAND-SYSTEM, HERSTELLUNGSVERFAHREN DAFÜR UND VERFAHREN ZUR VERWENDUNG DAVON
SYSTEME DE CATALYSEUR/LIGAND MICROENCAPSULE ET PROCEDES DE PREPARATION ET D'UTILISATION

(30) Priority: 14.08.2003 GB 0319071
(43) Date of publication of application: 10.05.2006
(73) Proprietor: Reaxa Limited, Blackley Manchester M9 8ZS (GB)
(72) Inventor: PEARS, David Alan, Manchester M9 8ZS (GB); TREACHER, Kevin Edward, Manchester M9 8ZS (GB); NISAR, Mohammed, Manchester M9 8ZS (GB)
(74) Representative: Harrison Goddard Foote
(86) International application number: PCT/GB2004/003504
(87) International publication number: WO 2005/016510

(56) References cited:
- EP-A- 0 940 170
- EP-A- 1 386 663
- WO-A-03/006151
- US-A1- 2002 045 709
- ANONYMOUS: "Avecia's New Immobilised Palladium Catalyst technology" PD ENCAT TM, [Online] May 2004 (2004-05), XP002305194 Retrieved from the Internet: URL:HTTP://WWW.AVECIA.COM/PHARMS/CORETECH/ TECHNOLOGIES/PDENCAT_FLYER_020504.PDF> [retrieved on 2004-11-09]

## Description

This invention relates to a catalyst, to a method of preparing a catalyst and in particular to a method of preparing a microencapsulated catalyst.

WO03/006151 describes an encapsulated catalyst system and methods for the production of these encapsulated catalysts. One particular system described in WO03/006151 concerns palladium based encapsulated catalysts which find use in coupling reactions. These palladium based encapsulated catalysts are most often derived by micro-encapsulation of palladium acetate. It has recently been found that by carrying out the micro-encapsulation of the metal catalyst in the presence of a ligand that metal catalysts losses during the encapsulation process may be ameliorated.

We describe a process for the preparation of a microencapsulated catalyst-ligand system which comprises forming a microcapsule shell by interfacial polymerisation in the presence of a catalyst and a ligand.

According to a first aspect of the present invention there is provided a microencapsulated catalyst-ligand system comprising a transition metal catalyst and a ligand microencapsulated within a permeable polymer microcapsule shell, wherein the microcapsule shell is formed by interfacial polymerisation and wherein the ligand is encapsulated along with the transition metal catalyst as a component of the organic phase, wherein the transition metal catalyst is platinum, palladium, osmium, ruthenium, rhodium, iridium, cobalt, iron and nickel, wherein the ligand is an organic moiety comprising one or more P atoms, wherein the permeable polymer microcapsule shell is the product of self-condensation and/or cross-linking of etherified urea-formaldehyde resins or prepolymers in which from about 50 to about 98% of the methylol groups have been etherified with a C₄-C₁₀ alcohol, or wherein the permeable polymer microcapsule shell is a polyurea microcapsule prepared from at least one polyisocyanate and/or tolylene diisocyanate.

According to a second aspect of the present invention there is provided a process for the preparation of a microencapsulated catalyst-ligand system which comprises forming a microcapsule shell by interfacial polymerisation in the presence of a transition metal catalyst and a ligand that is an organic moiety comprising one or more P atoms, which comprises
(a) dissolving or dispersing the catalyst and ligand in a first phase,
(b) dispersing the first phase in a second, continuous phase to form an emulsion,
(c) reacting one or more microcapsule wall-forming materials at the interface between the dispersed first phase and the continuous second phase to form a microcapsule polymer shell encapsulating the dispersed first phase core and optionally
(d) recovering the microcapsules from the continuous phase,
wherein the transition metal catalyst is platinum, palladium, osmium, ruthenium, rhodium, iridium, cobalt, iron and nickel, and wherein the wall-forming materials comprise at least one polyisocyanate and/or tolylene diisocyanate.

The catalyst is a transition metal catalyst. The term transition metal catalyst as used herein includes (a) the transition metal itself, normally in finely divided or colloidal form, (b) a complex of a transition metal or (c) a compound containing a transition metal. If desired a pre-cursor for the catalyst may be microencapsulated within the polymer microcapsule shell and subsequently converted to the catalyst, for example by heating. The term catalyst thus also includes a catalyst pre-cursor.

Transition metals on which the catalysts for use in the present invention may be based are platinum, palladium, osmium, ruthenium, rhodium, iridium, iron and nickel. Highly preferred transition metals on which the catalysts for use in the present invention may be based include osmium, ruthenium and rhodium and especially palladium. Air sensitive catalysts may be handled using conventional techniques to exclude air.

Palladium in a variety of forms may be microencapsulated according to the present invention and is useful as a catalyst for a wide range of reactions.

Preferably palladium is used directly in the form of an organic solvent soluble form and is most preferably palladium acetate. Thus for example palladium acetate may be suspended or more preferably dissolved in a suitable solvent such as a hydrocarbon solvent or a chlorinated hydrocarbon solvent and the resultant solution may be microencapsulated according to the present invention. Chloroform is a preferred solvent for use in the microencapsulation of palladium acetate.

According to literature sources palladium acetate decomposes to the metal under the action of heat. Catalysts of the present invention derived from palladium acetate have proved to be effective, although it is not presently known whether palladium is present in the form of the metal or remains as palladium acetate.

The ligand is an organic ligand comprising one or more P atoms. Organic ligands typically include organic moieties which comprise at least one functional group or hetroatom which can coordinate to the metal atoms of the catalyst. Organic ligands include mono-functional, bi-functional and multi-function ligands. Mono-fuctional ligands comprise only one functional group or hetroatom which can coordinate to a metal. Bi-functional ligands or multi-function ligands comprise more than one functional group or hetroatom which can coordinate to a metal.

Preferably, the organic ligand is soluble in organic solvents.

The organic ligand is an organic moiety comprising one or more P atoms.

Highly preferred are organic ligands of formula (1):

PR¹R²R³ (1)

wherein:
R¹, R² and R³ are each independently an optionally substituted hydrocarbyl group, an optionally substituted hydrocarbyloxy group, or an optionally substituted hetrocyclyl group or one or more of R¹ & R², R¹ & R³, R² & R³ optionally being linked in such a way as to form an optionally substituted ring(s).

Hydrocarbyl groups which may be represented by R¹⁻³ independently include alkyl, alkenyl and aryl groups, and any combination thereof, such as aralkyl and alkaryl, for example benzyl groups.

Alkyl groups which may be represented by R¹⁻³ include linear and branched alkyl groups comprising up to 20 carbon atoms, particularly from 1 to 7 carbon atoms and preferably from 1 to 5 carbon atoms. When the alkyl groups are branched, the groups often comprising up to 10 branch chain carbon atoms, preferably up to 4 branch chain atoms. In certain embodiments, the alkyl group may be cyclic, commonly comprising from 3 to 10 carbon atoms in the largest ring and optionally featuring one or more bridging rings. Examples of alkyl groups which may be represented by R¹⁻³ include methyl, ethyl, propyl, 2-propyl, butyl, 2-butyl, t-butyl and cyclohexyl groups.

Alkenyl groups which may be represented by R¹⁻³ include C₂₋₂₀, and preferably C₂₋₆ alkenyl groups. One or more carbon - carbon double bonds may be present. The alkenyl group may carry one or more substituents, particularly phenyl substituents. Examples of alkenyl groups include vinyl, styryl and indenyl groups.

Aryl groups which may be represented by R¹⁻³ may contain 1 ring or 2 or more fused rings which may include cycloalkyl, aryl or heterocyclic rings. Examples of aryl groups which may be represented by R¹⁻³ include phenyl, tolyl, fluorophenyl, chlorophenyl, bromophenyl, trifluoromethylphenyl, anisyl, naphthyl and ferrocenyl groups.

Heterocyclic groups which may be represented by R¹⁻³ independently include aromatic, saturated and partially unsaturated ring systems and may constitute 1 ring or 2 or more fused rings which may include cycloalkyl, aryl or heterocyclic rings. The \heterocyclic group will contain at least one heterocyclic ring, the largest of which will commonly comprise from 3 to 7 ring atoms in which at least one atom is carbon and at least one atom is any of N, O, S or P. Examples of heterocyclic groups which may be represented by R¹⁻³ include pyridyl, pyrimidyl, pyrrolyl, thiophenyl, furanyl, indolyl, quinolyl, isoquinolyl, imidazoyl and triazoyl groups.

When any of R¹⁻³ is a substituted hydrocarbyl or heterocyclic group, the substituent(s) should be selected such so as not to adversely affect the activity of the catalyst. Optional substituents include halogen, cyano, nitro, hydroxy, amino, thiol, acyl, hydrocarbyl, perhalogentated hydrocarbyl, heterocyclyl, hydrocarbyloxy, mono or di-hydrocarbylamino, hydrocarbylthio, esters, carboxylate, carbonates, amides, sulphonate, sulphonyl and sulphonamido groups wherein the hydrocarbyl groups are as defined for R¹ above. One or more substituents may be present, and includes when any of R¹, R² or R³ is a perhalogenated hydrocarbyl group. Examples of perhalogenated alkyl groups which may be represented by R¹⁻³ include -CF₃ and -C₂F₅.

When any of R¹ & R², R¹ & R³, R² & R³ are linked in such a way that when taken together with the phosphorus atom to which they are attached that a ring is formed, it is preferred that these rings be 5, 6 or 7 membered rings.

Examples of phosphorus based ligands of formula (1) include PMe₂CF₃, P(OEt)₃, P(Et)₃, P(Bu)₃, P(cyclohexyl)₃, PPhEt₂, PPh₂Me, PPh₃, P(CH₂Ph)₃, P(CH₂Ph)Ph₂, P(*p*-tolyl)₃, P(*o*-C₆H₄OMe)₃, P(OPh)₃, P(O-*p*-tolyl)₃, P(*p*-C₆H₄OMe)₃, P(*o*-tolyl)₃, P(*m*-tolyl)₃, PMe₃, PPhMe₂, PPh₂Et, P(*i*-Pr)₃, P(*t*-Bu)₃, PPhCH₂Ph, PPh₂OEt, PPh(OEt)₂, P(O-*o*-tolyl)₃, P(OMe)₃, P(*n*-Pr)₃, PPh(*i*-Pr)₂, PPh₂(*i*-Pr), PPhBu₂, PPh₂Bu, P(*i*-Bu)₃, PPh(cyclohexyl)₂, PPh₂(cyclohexyl), P(CH₂Ph)₂Et, P(CH₂Ph)Et₂, P(C₆F₅)Ph₂, P(*p*-C₆H₄F)₃, P(*p*-C₆H₄Cl)₃, P(C₆F₅)₂Ph, P(*o*-C₆H₄F)₃, P(*o*-C₆H₄Cl)₃, P(2-furanyl)₃, P(2-thienyl)₃, P(*n*-octyl)₃, P(*p-*C₆H₄NO₂)₃, 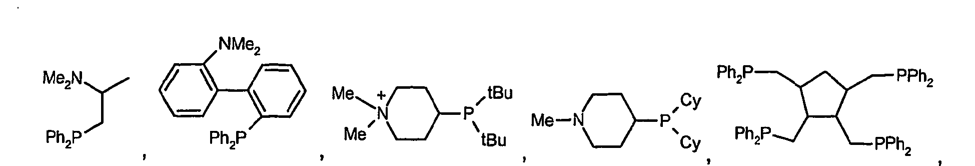 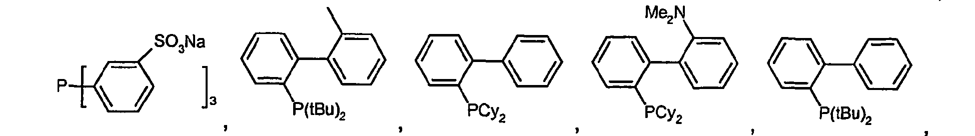 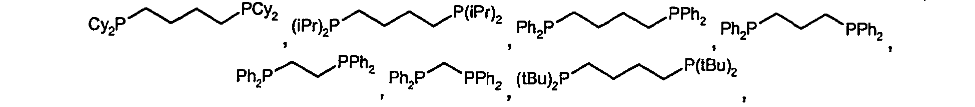 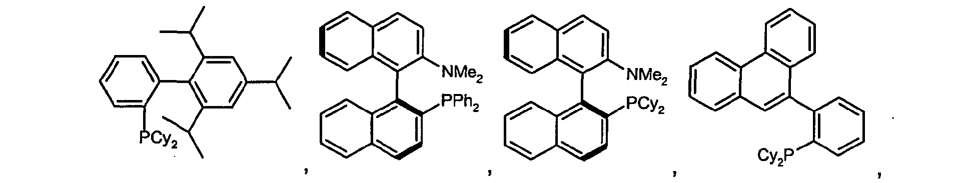 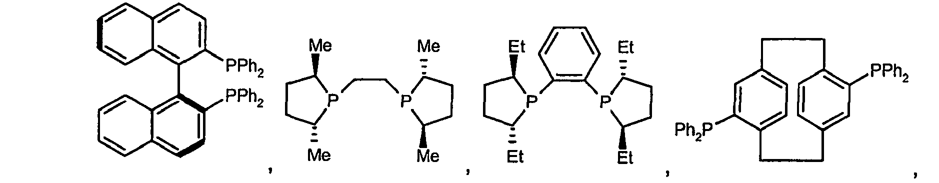 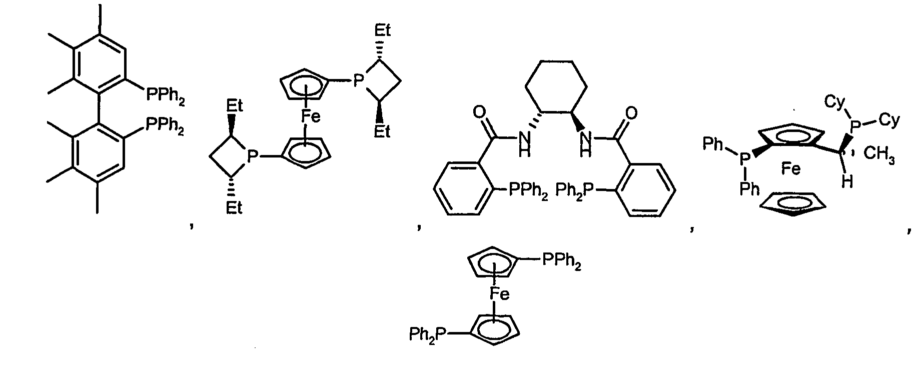 and where Cy = cyclohexyl.

Preferably organic ligands are selected so as not to adversely effect the properties of the catalyst. More preferably organic ligands are selected to enhance catalytic activity. For example, cross couplings traditionally employ phosphines, and the more electron rich the ligand is, the better the activity usually is. However, electron rich ligands tend to show increased air sensitivity. A good compromise, balancing increased activity and increased air sensitivity is either to incorporate three bulky alkyl groups, for example as in tri(tert-butyl)phoshine (2), or to position an additional donor grouping within proximity of the triaryl phoshine moiety, for example as in alaphos (3), or a combination of these approaches, for example as in (4).

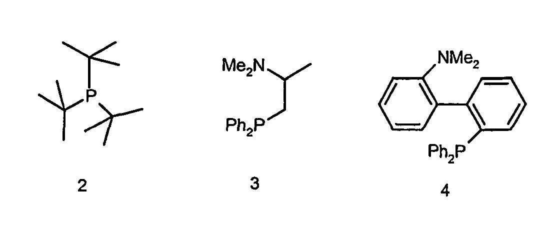

The ligand may also be selected on the basis of the reactions the catalyst is adapted to enhance. For example, Ligand (2) may be suited where the catalyst is for use in Stille, Suzuki, Sonogashira and Negishi reactions. Ligand (3) may be suited where the catalyst is for use in the coupling of alkynyl-Grignard reagents. Ligand (4) may be suited where the catalyst is for use in Suzuki coupling and C-N bond forming reactions. Trialkylphosphites may be suited where the catalyst is for use in Suzuki couplings of aromatic chlorides and bromides.

A recent summary in which cross coupling reactions are discussed, Metal-Catalysed Cross Coupling reactions; Diedrich, F.; Stang, P.J., Eds.; Wiley-VCH: Weinheim, 1998, provides a useful a guide to the selection of ligands to enhance catalytic activity.

It is understood that one or more ligands and/or one or more catalysts may be employed in the process of the present invention. Where multiple ligands and/or multiple catalysts are employed, each independently may be selected for the ability to enhance or catalyse the same or similar reaction types, or for the ability to enhance or catalyse different reaction types.

There are various types of interfacial polymerisation techniques but all involve reaction at the interface of a dispersed phase and a continuous phase in an emulsion system. Typically the dispersed phase is an oil phase and the continuous phase is an aqueous phase but interfacial polymerisation reactions at the interface of a continuous oil phase and a dispersed aqueous phase are also possible. Thus for example an oil or organic phase is dispersed into a continuous aqueous phase comprising water and a surface-active agent. The organic phase is dispersed as discrete droplets throughout the aqueous phase by means of emulsification, with an interface between the discrete organic phase droplets and the surrounding continuous aqueous phase solution being formed. Polymerisation at this interface forms the microcapsule shell surrounding the dispersed phase droplets.

In one type of interfacial condensation polymerisation microencapsulation process, monomers contained in the oil and aqueous phase respectively are brought together at the oil/water interface where they react by condensation to form the microcapsule wall. In another type of polymerisation reaction, the *in situ* interfacial condensation polymerisation reaction, all of the wall-forming monomers are contained in the oil phase. *In situ* condensation of the wall-forming materials and curing of the polymers at the organic-aqueous phase interface may be initiated by heating the emulsion to a temperature of between about 20°C to about 100°C and optionally adjusting the pH. The heating occurs for a sufficient period of time to allow substantial completion of *in situ* condensation of the prepolymers to convert the organic droplets to capsules consisting of solid permeable polymer shells entrapping the organic core materials.

One type of microcapsule prepared by *in situ* condensation and known in the art is exemplified in U.S. patents 4,956,129 and 5,332,584. These microcapsules, commonly termed "aminoplast" microcapsules, are prepared by the self-condensation and/or cross-linking of etherified urea-formaldehyde resins or prepolymers in which from about 50 to about 98% of the methylol groups have been etherified with a C₄-C₁₀ alcohol (preferably n-butanol). The prepolymer is added to or included in the organic phase of an oil/water emulsion. Self-condensation of the prepolymer takes place optionally under the action of heat at low pH. To form the microcapsules, the temperature of the two-phase emulsion is raised to a value of from about 20°C to about 90°C, preferably from about 40°C to about 90°C, most preferably from about 40°C to about 60°C. Depending on the system, the pH value may be adjusted to an appropriate level. For the purpose of this invention a pH of about 1.5 to 3 is appropriate:

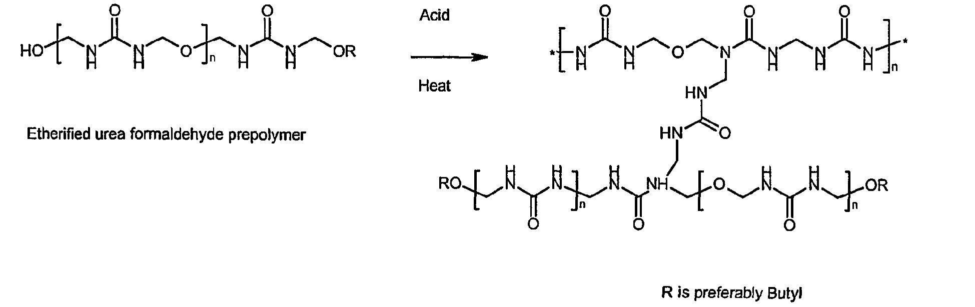

As described in U.S. Pat. No. 4,285,720 the prepolymers most suitable for use in this invention are partially etherified urea-formadehyde prepolymers with a high degree of solubility in organic phase and a low solubility in water. Etherified urea-formaldehyde prepolymers are commercially available in alcohol or in a mixture of alcohol and xylene. Examples of preferred commercially available prepolymers include the Beetle etherified urea resins manufactured by BIP (e.g. BE607, BE610, BE660, BE676) or the Dynomin N-butylated urea resins from Dyno Cyanamid (e.g. Dynomin UB-24-BX, UB-90-BX etc.).

Acid polymerisation catalysts capable of enhancing the microcapsule formation can be placed in either the aqueous or the organic phase. Acid polymerisation catalysts are generally used when the core material is too hydrophobic, since they serve to attract protons towards the organic phase. Any water soluble acid polymerisation catalysts which has a high affinity for the organic phase can be used. Carboxylic and sulphonic acids are particularly useful.

One further type of microcapsule prepared by *in situ* condensation and found in the art, as exemplified in U.S. Patent No. 4,285,720 is a polyurea microcapsule which involves the use of at least one polyisocyanate such as polymethylene polyphenyleneisocyanate (PMPPI) and/or tolylene diisocyanate (TDI) as the wall-forming material. In the creation of polyurea microcapsules, the wall-forming reaction is generally initiated by heating the emulsion to an elevated temperature at which point a proportion of the isocyanate groups are hydrolyzed at the interface to form amines, which in turn react with unhydrolyzed isocyanate groups to form the polyurea microcapsule wall. During the hydrolysis of the isocyanate monomer, carbon dioxide is liberated. The addition of no other reactant is required once the dispersion establishing droplets of the organic phase within a continuous liquid phase, i.e., aqueous phase, has been accomplished. Thereafter, and preferably with moderate agitation of the dispersion, the formation of the polyurea microcapsule can be brought about by heating the continuous liquid phase or by introducing a polymerisation catalyst such as an alkyl tin or a tertiary amine capable of increasing the rate of isocyanate hydrolysis.

The amount of the organic phase may vary from about 1% to about 75% by volume of the aqueous phase present in the reaction vessel. The preferred amount of organic phase is about 10 percent to about 50 percent by volume. The organic polyisocyanates used in this process includes both aromatic and aliphatic mono and poly functional isocyanates. Examples of suitable aromatic diisocyantes and other polyisocyantes include the following: 1-chloro-2,4-phenylene diisocyante, m-phenylene diisocyante (and its hydrogenated derivative), p-phenylene diisocyante (and its hydrogenated derivative), 4,4'-methylenebis (phenyl isocyanate), 2,4-tolylene diisocyanate, tolylene diisocyanate (60% 2,4-isomer, 40% 2,6-isomer), 2,6-tolylene diisocyante, 3,3'-dimethyl-4,4'-biphenylene diisocyante, 4,4'-methylenebis (2-methylphenyl isocyanate), 3,3'-dimethoxy-4,4'-biphenylene diisocyanate, 2,2',5,5'-tetramethyl-4,4'-biphenylene diisocyanate, 80% 2,4- and 20% 2,6-isomer of tolylene diisocyanate, polymethylene polyphenylisocyante (PMPPI), 1,6-hexamethylene diisocyanate, isophorone diisocyanate, tetramethylxylene diisocyanate and 1,5-naphthylene diisocyanate, hydrophilic aliphatic polyisocyanates based on hexamethylene diisocyanate (e.g. Bayhydur 3100, Bayhydur VP LS2319 and Bayhydur VP LS2336) and hydrophilic aliphatic polyisocyanates based on isophorone diisocyanate (e.g. Bayhydur VP LS2150/1)

It may be desirable to use combinations of the above mentioned polyisocyantes. Preferred polyisocyantes are polymethylene polyphenylisocyante (PMPPI) and mixtures of polymethylene polyphenylisocyante (PMPPI) with tolylene diisocyanate or other difunctional aromatic or aliphatic isocyantes.

One further class of polymer precursors consists of a primarily oil-soluble component and a primarily water-soluble component which react together to undergo interfacial polymerisation at a water/oil interface. Typical of such precursors are an oil-soluble isocyanate such as those listed above and a water-soluble poly amine such as ethylenediamine and/or diethylenetriamine to ensure that chain extension and/or cross-linking takes place. Cross-linking variation may be achieved by increasing the functionality of the amine. Thus for example, cross-linking is increased if ethylenediamine is replaced by a polyfunctional amine such as DETA (Diethylene triamine), TEPA (Tetraethylene pentamine) and other well established cross linking amines. Isocyanate functionality can be altered (and thus cross-linking also altered) by moving from monomeric isocyanates such as toluene diisocyanate to PMPPI. Mixtures of isocyanates, for example mixtures of tolylene diisocyanate and PMPPI, may also be used. Moreover, the chemistry may be varied from aromatic isocyanates to aliphatic isocyanates such as hexamethylenediisocyanate and isophorone diisocyanate. Further modifications can be achieved by partially reacting the (poly) isocyanate with a polyol to produce an amount of a polyurethane within the isocyanate chemistry to induce different properties to the wall chemistry. For example, suitable polyols could include simple low molecular weight aliphatic di, tri or tetraols or polymeric polyols. The polymeric polyols may be members of any class of polymeric polyols, for example: polyether, polyTHF, polycarbonates, polyesters and polyesteramides. One skilled in the art will be aware of many other chemistries available for the production of a polymeric wall about an emulsion droplet. As well as the established isocyanate/amine reaction to produce a polyurea wall chemistry, there can be employed improvements to this technology including for example that in which hydrolysis of the isocyanate is allowed to occur to an amine which can then further react internally to produce the polyurea chemistry (as described for example in USP 4285720). Variation in the degree of cross linking may be achieved by altering the ratio of monomeric isocyanate to polymeric isocyanate. As with the conventional isocyanate technology described above, any alternative isocyanates can be employed in this embodiment.

One skilled in the art will be aware that the various methods previously described to produce polyurea microcaps typically leave unreacted amine (normally aromatic amine) groups attached to the polymer matrix. In some cases it may be advantageous to convert such amine groups to a substantially inert functionality. Preferred are methods for the conversion of such amine groups to urea, amide or urethane groups by post reaction of the microcapsules in an organic solvent with a monoisocyanate, acid chloride or chloroformate respectively.

U.S. Patent No. 6,020,066 (assigned to Bayer AG) discloses another process for forming microcapsules having walls of polyureas and polyiminoureas, wherein the walls are **characterized in that** they consist of reaction products of crosslinking agents containing NH₂ groups with isocyanates. The crosslinking agents necessary for wall formation include di- or polyamines, diols, polyols, polyfunctional amino alcohols, guanidine, guanidine salts, and compounds derived there from. These agents are capable of reacting with the isocyanate groups at the phase interface in order to form the wall.

The preferred materials for the microcapsule are a polyurea, formed as described in U.S. Pat. No. 4,285,720, or a urea-formaldehyde polymer as described in U.S. Pat. No. 4,956,129. Polyurea is preferred because the microcapsule is formed under very mild conditions and does not require acidic pH to promote polymerisation and so is suitable for use when encapsulating acid-sensitive catalysts. The most preferred polymer type for the microcapsule is polyurea as described in U.S. Pat. No. 4,285,720 based on the PMPPI polyisocyanate either alone or in combination with other aromatic di or multi functional isocyantes.

Microencapsulation techniques described above most commonly involve the microencapsulation of an oil phase dispersed within an aqueous continuous phase, and for such systems the catalyst is suitably capable of being suspended within the microencapsulated oil phase or more preferably is soluble in a water-immiscible organic solvent suitable for use as the dispersed phase in microencapsulation techniques. The scope of the present invention is not however restricted to the use of oil-in-water microencapsulation systems and water-soluble catalysts may be encapsulated via interfacial microencapsulation of water-in-oil emulsion systems. Water-soluble catalysts may also be encapsulated via interfacial microencapsulation of water-in-oil-in-water emulsion systems.

The ligand is most preferably encapsulated along with the metal catalyst as a component of the organic phase.

Preferably the ligand, metal catalyst, solvent and wall forming material are dispersed as a single organic phase into the continuous aqueous phase. However, if any of the components are incompatible then it may be advantageous to disperse all the components separately or in combinations wherein the continuous phase conditions are such that polymerisation is delayed until the separate organic components have mixed through diffusion and particle coallescenece and division. For example, the ligand can be dissolved in an organic solvent and then dispersed into the aqueous phase either simultaneously with the other organic components or at some stage after dispersion of the organic solution of the metal catalyst and wall forming material.

Most preferably, the organic soluble ligand is dissolved along with the metal catalyst and the polymerisable wall forming reactants and then all dispersed as a single solution into the continuous aqueous phase.

The molar ratio of ligand to metal catalyst is in the range from 1/100 to 100/1 and more preferably in the range 1/20 to 20/1 and most preferably in the range 1 /10 to 10/1.

Preferred ligands are soluble in organic solvents and not sensitive to water and do not interfere or become covalently bound into the polymer matrix.

Most preferred ligands are phosphorus based ligands of formula (1) include P(cyclohexyl)₃, PPh₃, P(CH₂Ph)₃, P(CH₂Ph)Ph₂, P(*p*-tolyl)₃, P(*o*-C₆H₄OMe)₃, P(OPh)₃, P(O*p*-tolyl)₃, P(*p*-C₆H₄OMe)₃, P(*o*-tolyl)₃, P(*m*-tolyl)₃, PPhCH₂Ph, P(O-*o*-tolyl)₃, PPh₂(*i*-Pr), PPh₂Bu, PPh(cyclohexyl)₂, PPh₂(cyclohexyl), PPh₂(CH₂)₄PPh₂, tri(2,4-di-tert-butylphenyl)phosphite, PPh₂(CH₂)₃PPh₂, PPh₂(CH₂)₂PPh₂

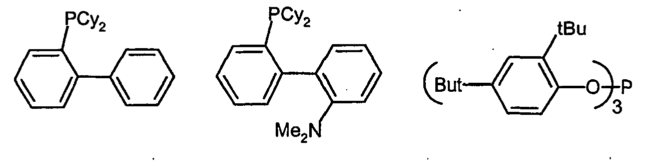

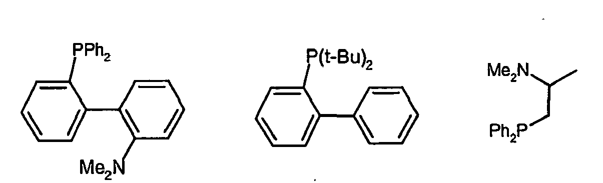

Preferably, the continuous phase is water. The amount of organic phase dispersed into the aqueous phase may vary from 1% to about 75% by volume of the aqueous phase present in the reactor. Preferably the amount of organic phase is about 10% to about 50% by volume.

The weight % wall forming material in the organic phase (which includes ligand, metal catalyst and solvent) is in the range 5 to 95%, more preferably 10 to 70% and most preferably 10 to 50%.

The weight % of solvent in the organic phase (which includes ligand, catalyst, wall forming material) is in the range 5 to 95%, more preferably 15 to 90% and most preferably 40 to 80%.

The loading level of the microencapsulated catalyst can be varied. Microencapsulated catalysts with loadings 0.01mmol/g to 0.8mmol/g are typical, especially where the loading is based on metal content. Loadings of 0.2mmol/g to 0.6mmol/g are preferred.

The microencapsulation of the catalyst and ligand takes place according to techniques well known in the art. Typically the catalyst is dissolved or dispersed in an oil phase which is emulsified into a continuous aqueous phase to form an emulsion which is generally stabilised by a suitable surfactant system. A wide variety of surfactants suitable for forming and stabilising such emulsions are commercially available and may be used either as the sole surfactant or in combination. The emulsion may be formed by conventional low or high-shear mixers or homogenisation systems, depending on particle size requirements. A wide range of continuous mixing techniques can also be utilised. Suitable mixers which may be employed in particular include dynamic mixers whose mixing elements contain movable parts and static mixers which utilise mixing elements without moving parts in the interior. Combinations of mixers (typically in series) may be advantageous. Examples of the types of mixer which may be employed are discussed in US patent 627132. Alternatively, emulsions may be formed by membrane emulsification methods. Examples of membrane emulsification methods are reviewed in Journal of Membrane Science 169 (2000) 107-117.

Typical examples of suitable surfactants include:
a) condensates of alkyl (eg octyl, nonyl or polyaryl) phenols with ethylene oxide and optionally propylene oxide and anionic derivatives thereof such as the corresponding ether sulphates, ether carboxylates and phosphate esters; block copolymers of polyethylene oxide and polypropylene oxide such as the series of surfactants commercially available under the trademark PLURONIC (PLURONIC is a trademark of BASF);
b) TWEEN surfactants, a series of emulsifiers comprising a range of sorbitan esters condensed with various molar proportions of ethylene oxide;
c) condensates of C₈ to C₃₀ alkanols with from 2 to 80 molar proportions of ethylene oxide and optionally propylene oxide; and
d) polyvinyl alcohols, including the carboxylated and sulphonated products.

Furthermore, WO 01/94001 teaches that one or more wall modifying compounds (termed surface modifying agents) can, by virtue of reaction with the wall forming materials, be incorporated into the microcapsule wall to create a modified microcapsule surface with built in surfactant and/or colloid stabiliser properties. Use of such modifying compounds may enable the organic phase wall forming material to be more readily dispersed into the aqueous phase possibly without the use of additional colloid stabilisers or surfactants and/or with reduced agitation. Examples of wall modifying compounds which may find particular use in the present invention include anionic groups such as sulphonate or carboxylate, non-ionic groups such as polyethylene oxide or cationic groups such as quaternary ammonium salts.

In addition the aqueous phase may contain other additives which may act as aids to the process of dispersion or the reaction process. For example, de-foamers may be added to lesson foam build up, especially foaming due to gas evolution.

A wide variety of materials suitable for use as the oil phase will occur to one skilled in the art. Examples include, diesel oil, isoparaffin, aromatic solvents, particularly alkyl substituted benzenes such as xylene or propyl benzene fractions, and mixed napthalene and alkyl napthalene fractions; mineral oils, white oil, castor oil, sunflower oil, kerosene, dialkyl amides of fatty acids, particularly the dimethyl amides of fatty acids such as caprylic acid; chlorinated aliphatic and aromatic hydrocarbons such as 1,1,1-trichloroethane and chlorobenzene, esters of glycol derivatives, such as the acetate of the n-butyl, ethyl, or methyl ether of diethylene glycol, the acetate of the methyl ether of dipropylene glycol, ketones such as isophorone and trimethylcyclohexanone (dihydroisophorone) and the acetate products such as hexyl, or heptyl acetate. Organic liquids conventionally preferred for use in microencapsulation processes are xylene, diesel oil, isoparaffins and alkyl substituted benzenes, although some variation in the solvent may be desirable to achieve sufficient solubility of the catalyst in the oil phase.

Certain catalysts may catalyse the wall-forming reaction during interfacial polymerisation. In general it is possible to modify the microencapsulation conditions to take account of this. Some interaction, complexing or bonding between the catalyst and the polymer shell may be positively desirable since it may prevent agglomeration of finely divided or colloidal catalysts.

In some instances, the catalyst being encapsulated may increase the rate of the interfacial polymerisation reactions. In such cases it may be advantageous to cool one or both of the organic and continuous aqueous phases such that interfacial polymerisation is largely prevented whilst the organic phase is being dispersed. The reaction is then initiated by warming in a controlled manner once the required organic droplet size has been achieved. For example, in certain reactions the aqueous phase may be cooled to less than 10°C, typically to between 5°C to 10°C, prior to addition of the oil phase and then when the organic phase is dispersed the aqueous phase may be heated to raise the temperature above 15°C to initiate polymerisation.

It is preferred that microencapsulation of the oil phase droplets containing the catalyst and the ligand takes place by an interfacial polymerisation reaction as described above under an inert atmosphere. The aqueous dispersion of microcapsules containing the catalyst and ligand may be used to catalyse a suitable reaction without further treatment. Preferably however the microcapsules containing the catalyst and the ligand are removed from the aqueous phase by filtration. It is especially preferred that the recovered microcapsules are washed with water to remove any remaining surfactant system and with a solvent capable of extracting the organic phase contained within the microcapsule. Relatively volatile solvents such as halogenated hydrocarbon solvents for example chloroform are generally more readily removed by washing or under reduced pressure than are conventional microencapsulation solvents such as alky substituted benzenes. If the majority of the solvent is removed, the resultant microcapsule may in effect be a substantially solvent-free polymer bead containing the catalyst efficiently dispersed within the microcapsule polymer shell. The process of extracting the organic phase may cause the microcapsule walls to collapse inward, although the generally spherical shape will be retained. If desired the dry microcapsules may be screened to remove fines, for example particles having a diameter less than about 20 microns.

In the case of the microencapsulated palladium acetate microparticles it is preferred that the recovered water wet microcapsules are washed with copious quantities of deionised water, followed by ethanol washes and finally hexane washes. The microcapsules are then dried in a vac oven at 50°C for approx 4 hours to give a product with greater than 95% non volatile content (by exhaustive drying) and preferably greater than 98% non volatile content.

In the second aspect, preferably the first phase is an organic phase and the second, continuous phase is an aqueous phase. Suitably a protective colloid (surfactant) is used to stabilise the emulsion.

If desired the recovered microcapsules may be washed with a suitable solvent to extract the first phase, and in particular the organic phase solvent from the core and any loosely bound metal catalyst or ligand. A suitable solvent, usually water, may also be used to remove the protective colloid or surfactant.

The microcapsule wall-forming material may for example be a monomer, oligomer or pre-polymer and the polymerisation may take place in situ by polymerisation and/or curing of the wall-forming material at the interface. In the alternative polymerisation may take place at the interface by the bringing together of a first wall-forming material added through the continuous phase and a second wall-forming material in the discontinuous phase.

It has been found that the microencapsulated catalyst-ligand system obtainable by the processes of the first and second aspects of the present invention are resistant to both catalyst and ligand leaching and also show enhancement of activity.

According to a third aspect of the present invention there is provided a microencapsulated catalyst-ligand system obtainable by a process comprising forming a microcapsule shell by interfacial polymerisation in the presence of a catalyst and a ligand.

Preferred catalysts, ligands and interfacial polymerisation methods and techniques are as stated above in connection with the first and second aspects of the present invention.

Depending on the conditions of preparation and in particular the degree of interaction between the catalyst, the ligand and the wall-forming materials, the microencapsulated catalyst-ligand system of the present invention may be regarded at one extreme as a 'reservoir' in which the finely divided catalyst and ligand (either as solid or in the presence of residual solvent) is contained within an inner cavity bound by an integral outer polymer shell or at the other extreme as a solid, amorphous polymeric bead throughout which the finely divided catalyst and ligand is distributed. In practice the position is likely to be between the two extremes. Regardless of the physical form of the encapsulated catalyst-ligand of the present invention and regardless of the exact mechanism by which access of reactants to the catalyst takes place (diffusion through a permeable polymer shell or absorption into a porous polymeric bead), we have found that encapsulated catalysts and ligands of the present invention permit effective access of the reactants to the catalyst whilst presenting the catalyst and ligand in a form in which it can be recovered and if desired re-used. Furthermore, since in the present invention the polymer shell/bead is formed in situ by controlled interfacial polymerisation (as opposed to uncontrolled deposition from an organic solution of the polymer), the microencapsulated catalyst-ligand system of the present invention may be used in a wide range of organic solvent-based reactions.

The microcapsules of this invention are regarded as being insoluble in most common organic solvents by virtue of the fact that they are highly crosslinked. As a consequence, the microcapsules can be used in a wide range of organic solvent based reactions.

The microcapsules containing the catalyst and ligand may be added to the reaction system to be catalysed and, following completion of the reaction, may be recovered for example by filtration. The recovered microcapsules may be returned to catalyse a further reaction and re-cycled as desired. Alternatively, the microcapsules containing the catalyst and ligand may be used as a stationary catalyst in a continuous reaction. For instance, the microcapsule particles could be immobilised with a porous support matrix (e.g. membrane). The microcapsule is permeable to the extent that catalysis may take place either by diffusion of the reaction medium through the polymer shell walls or by absorption of the reaction medium through the pore structure of the microcapsule.

In some circumstances, particularly where the ligand is highly reactive or may interfere with the interfacial polymerisation process, it may be advantageous to introduce the ligand after the polymerisation.

The invention is illustrated by the following examples. The use of the catalysts of the invention for catalysis of typical reactions is illustrated but the invention is not limited to the use of the catalysts for any specific reaction. In the following Examples GOSHENOL is polyvinyl alcohol, SOLVESSO 200 is just a high boiling (230- 257°C) mixture of aromatics (mainly naphthalenes), TERGITOL XD is the polyoxypropylene polyoxyethylene ether of butyl alcohol, REAX 100M is sodium lignosulfonate. REAX, TERGITOL and GOSHENOL are added as colloid stabilisers and detergents.

### Preparation of Comparative Catalyst Example 1 - Microencapsulated Palladium Acetate with 40% Wall Content

Pd(OAc)₂ (2.95g, 98%) was dissolved in chloroform (25.7g) and the solution stirred for 30 minutes. To this mixture was added polymethylene polyphenylene di-isocyanate (PMPPI) (19.11g) and the contents stirred for a further 60 minutes. The mixture was then added to an aqueous mixture containing 40% REAX 100 M solution (3.82g), 20% TERGITOL XD solution (0.96g) and 25% Poly Vinyl Alcohol (PVOH) solution (1.91g) in deionised water (80 ml) while shearing (using a FISHER 4-blade retreat curve stirrer) at 500 rpm for 8 minutes. After 8 minutes the shear rate was reduced to 250 rpm and at the onset of polymerisation (detected by carbon dioxide evolution) 3 drops of de-foamer (Drewplus S-4382, supplied by Ashland) were added and the suspension thus obtained was stirred at room temperature for an additional 24 hours. The microcapsules were filtered through a polyethylene frit (20 micron porosity) to remove any fine particles and then washed on a filter bed according to the sequence: deionised water (5 × 100 ml), ethanol (3 × 100 ml), hexane (3 × 100 ml), and then finally dried in a vacuum oven at 50°C.

### Analytical Results:

ICP analysis: 4.3% Pd wt/wt, Loading: 0.4 mmol/g (60% Pd encapsulated)

Particle Size Distribution: 60-340 µm (average: 180 µm)

### Preparation of Comparative Catalyst Example 2 - Microencapsulated Palladium Acetate with 30% Wall Content

An organic phase was produced by dissolving Pd(OAc)₂ (2.16g, 98%) in chloroform (32g, 99.9%) followed by stirring for 30 minutes. To this mixture was added polymethylene polyphenylene di-isocyanate (PMPPI) (14g) and the contents was stirred for a further 60 minutes. The mixture was then added to an aqueous mixture containing 40% REAX 100 M^{a} solution (3.85g), 20% TERGITOL XD^{b} solution (0.96g) and 25% Poly Vinyl Alcohol (PVOH) solution (1.93 g) in deionised water (96 ml) while shearing (using a FISHER 4-blade retreat-curve stirrer) at 500 rpm for 8 minutes. After eight minutes the shear rate was reduced to 250 rpm and at the onset of polymerisation (as detected by carbon dioxide evolution) 3 drops of de-foamer (Drewplus S-4382, Ashland) were added and the suspension thus obtained was stirred at room temperature for a further 24 hours. The microcapsules obtained were filtered though a polyethylene frit (20 micron porosity) and then washed on a filter bed according to the sequence: deionised water (5 × 100 ml), ethanol (3 × 100 ml), hexane (3 × 100 ml), and finally dried in a vacuum oven at 50°C.

### Analytical Results:

ICP analysis: 4.1% Pd wt/wt, Loading: 0.38 mmol/g (63% Pd encapsulated)

Particle Size Distribution: 60-360 µm (average: 200 µm)
^{a} - Highly sulfonated modified hybrid kraft lignin available from Meadwestvaco
^{b} -High molecular weight ethylene oxide/propylene oxide nonionic surfactant supplied by The Dow Chemical Company

### Preparation of Comparative Catalyst Example 3 - Microencapsulated of Microencapsulated Palladium Acetate with 20% Wall Content

An organic phase was produced by dissolving Pd(OAc)₂ (2.16g, 98%) in chloroform (58g, 99.9%) followed by stirring for 30 minutes. To this mixture was added polymethylene polyphenylene di-isocyanate (PMPPI) (14g) and the contents was stirred for a further 60 minutes. The mixture was then added to an aqueous mixture containing 40% REAX 100 M solution (3.85g), 20% TERGITOL XD solution (0.96g) and 25% Poly Vinyl Alcohol (PVOH) solution (1.93 g) in deionised water (96 ml) while shearing (using a FISHER 4-blade retreat-curve stirrer) at 500 rpm for 8 minutes. After eight minutes the shear rate was reduced to 250 rpm and at the onset of polymerisation (as detected by carbon dioxide evolution) 3 drops of de-foamer (Drewplus S-4382, Ashland) were added and the suspension thus obtained was stirred at room temperature for a further 24 hours. The microcapsules obtained were filtered though a polyethylene frit (20 micron porosity) and then washed on a filter bed according to the sequence: deionised water (5 × 100 ml), ethanol (3 × 100 ml), hexane (3 × 100 ml), and finally dried in a vacuum oven at 50°C.

### Analytical Results:

ICP analysis: 4.2% Pd wt/wt, Loading: 0.39 mmol/g (63% Pd encapsulated)

Particle Size Distribution: 60-395 µm (average: 211 µm)

### Preparation of Comparative Catalyst Example 4 - Microencapsulation of Palladium Acetate In a Polyurea Matrix with Reduced Crosslink Density

Pd(OAc)₂ (2.95g, 98%) was dissolved in chloroform (26.4g, 99.9%) and the solution stirred for 30 minutes. To this mixture was added polymethylene polyphenylene di-isocyanate (PMPPI) (9.55g) and methylene bis(phenyl isocyanate) (MDI) (9.55g) and the contents stirred for a further 60 minutes. The mixture was then added to an aqueous mixture containing 40% REAX 100 M solution (3.88g), 20% TERGITOL XD solution (0.97g) and 25% Poly Vinyl Alcohol (PVOH) solution (1.94g) in deionised water (97 ml) while shearing (using a FISHER 4-blade retreat curve stirrer) at 500 rpm for 8 minutes. After eight minutes the shear rate was reduced to 250 rpm and at the onset of polymerisation (as detected by carbon dioxide evolution) 3 drops of de-foamer (Drewplus S-4382, Ashland) were added and the suspension thus obtained stirred at room temperature for 24 hours. The microcapsules obtained were filtered though a polyethylene frit (20 micron porosity) to remove any fine material and then washed according to the sequence: deionised water (5 × 100 ml), ethanol (3 × 100 ml), hexane (3 × 100 ml), and finally dried in a vacuum oven at 50°C.

### Analytical Results:

ICP analysis: 4.7% Pd wt/wt, Loading: 0.44 mmol/g (77% Pd encapsulated)

Particle Size Distribution: 60-370 µm (average: 198 µm)

### Preparation of Comparative Catalyst Example 5 - Microencapsulation of Palladium Acetate In a Polyurea Matrix with Reduced Crosslink Density

Pd(OAc)₂ (2.95g, 98%) was dissolved in chloroform (26.4g, 99.9%) and the solution stirred for 30 minutes. To this mixture was added polymethylene polyphenylene di-isocyanate (PMPPI) (9.55g) and tolylene-2,4-diisocyanate (TDI) (9.55g) and the contents stirred for a further 60 minutes. The mixture was then added to an aqueous mixture containing 40% REAX 100 M solution (3.88g), 20% TERGITOL XD solution (0.97g) and 25% Poly Vinyl Alcohol (PVOH) solution (1.94g) in deionised water (97 ml) while shearing (using a FISHER 4-blade retreat curve stirrer) at 500 rpm for 8 minutes. After eight minutes the shear rate was reduced to 250 rpm and at the onset of polymerisation (as detected by carbon dioxide evolution) 3 drops of de-foamer (Drewplus S-4382, Ashland) were added and the suspension thus obtained stirred at room temperature for 24 hours. The microcapsules obtained were filtered though a polyethylene frit (20 micron porosity) to remove any fine material and then washed according to the sequence: deionised water (5 × 100 ml), ethanol (3 × 100 ml), hexane (3 × 100 ml), and finally dried in a vacuum oven at 50°C.

### Analytical Results:

ICP analysis: 3.5% Pd wt/wt, Loading: 0.33 mmol/g (55% Pd encapsulated)

Particle Size Distribution: 40-250µm (average: 124 µm)

### Preparation of Comparative Catalyst Example 6 - Microencapsulation of Palladium Acetate In a Polyurea Matrix with Reduced Crosslink Density

Pd(OAc)₂ (2.95g, 98%) was dissolved in chloroform (26.4g, 99.9%) and the solution stirred for 30 minutes. To this mixture was added polymethylene polyphenylene di-isocyanate (PMPPI) (9.55g) and 4,4-methylene bis (cyclohexyl isocyanate) (9.55g) and the contents stirred for a further 60 minutes. The mixture was then added to an aqueous mixture containing 40% REAX 100 M solution (3.88g), 20% TERGITOL XD solution (0.97g) and 25% Poly Vinyl Alcohol (PVOH) solution (1.94g) in deionised water (97 ml) while shearing (using a FISHER 4-blade retreat curve stirrer) at 500 rpm for 8 minutes. After eight minutes the shear rate was reduced to 250 rpm and at the onset of polymerisation (as detected by carbon dioxide evolution) 3 drops of de-foamer (Drewplus S-4382, Ashland) were added and the suspension thus obtained stirred at room temperature for 24 hours. The microcapsules obtained were filtered though a polyethylene frit (20 micron porosity) to remove any fine material and then washed according to the sequence: deionised water (5 × 100 ml), ethanol (3 × 100 ml), hexane (3 × 100 ml), and finally dried in a vacuum oven at 50°C.

### Analytical Results:

ICP analysis: 4.9% Pd wt/wt, Loading: 0.46 mmol/g (80% Pd encapsulated)

Particle Size Distribution: 60-400 µm (average: 175 µm)

### Preparation of Catalyst Examples 7 and 9 - Microencapsulated Pd(OAc)₂ with Co-Encapsulated PAr₃

Due to air-sensitive nature of ligands, the organic phase was prepared in a glove box under a nitrogen atmosphere. The organic phase was formed from Pd(OAc)₂ (2.95g, 98%) dissolved in chloroform (25.7g) and then stirred for 10 minutes followed by addition of either triphenylphosphine (1.72g 99%, 1:0.5 Pd/P molar ratio) (Example 7) or tri-o-tolyl phosphine (2g 97%, 1:0.5 Pd/P molar ratio) (Example 9) and then stirred for a further 30 minutes. To this mixture, polymethylene polyphenylene di-isocyanate (PMPPI) (19.11g) was added and the contents stirred for a further 60 minutes. This organic phase mixture was then added to an aqueous phase containing 40% REAX 100 M solution (3.95g), 20% TERGITOL XD solution (1g) and 25% Poly Vinyl Alcohol (PVOH) solution (1.98g) in deionised water (83 ml) while shearing (using a FISHER 4-blade retreat-curve stirrer) at 500 rpm for 8 minutes. The reaction was maintained under inert atmosphere (N₂) throughout. After 8 minutes the shear rate was reduced to 250 rpm and few drops of de-foamer (DrewPLus S-4382) were added during the onset of polymerisation (detected by carbon dioxide evolution). The suspension thus obtained was stirred at room temperature for a further 24 hours. The microcapsules were then filtered though a polyethylene frit (20 micron porosity) and the capsules washed on a filter bed according to the following sequence: deionised water (5 × 100 ml), ethanol (3 × 100 ml), hexane (3 × 100 ml), and finally dried in a vacuum oven at 50°C.

### Analytical Results:

### Example 7:

ICP Analysis: 5.2% Pd wt/wt, Loading: 0.5 mmol/g (82% Pd encapsulated)
0.75% P wt/wt, Loading: 0.24 mmol/g (90% P encapsulated)

Particle size Distribution: 60-420µm (average: 256 µm)

### Example 9:

ICP Analysis: 5.1% Pd wt/wt, Loading: 0.48 mmol/g (81 % Pd encapsulated)
0.75% P wt/wt, Loading: 0.24 mmol/g (89% P encapsulated)

Particle size Distribution: 60-460µm (average: 311 µm)

### Preparation of Catalyst Examples 8 - Microencapsulated Pd(OAc)₂ with Co-Encapsulated PPh₃

Due to air-sensitive nature of ligands, the organic phase was prepared in a glove box under a nitrogen atmosphere. The organic phase was formed from Pd(OAc)₂ (2.95g, 98%) dissolved in chloroform (25.7g) and then stirred for 10 minutes followed by addition of triphenylphosphine (0.35g, 98%, 1:0.1 Pd:P) and then stirred for a further 30 minutes. To this mixture was added polymethylene polyphenylene di-isocyanate (PMPPI) (19.11g) and the contents stirred for a further 60 minutes. This organic phase mixture was then added to an aqueous phase containing 40% REAX 100 M solution (3.95g), 20% TERGITOL XD solution (1g) and 25% Poly Vinyl Alcohol (PVOH) solution (1.98g) in deionised water (83 ml) while shearing (using a FISHER 4-blade retreat-curve stirrer) at 500 rpm for 8 minutes. The reaction was maintained under inert atmosphere (N₂) throughout. After 8 minutes the shear rate was reduced to 250 rpm and few drops of de-foamer (DrewPLus S-4382) were added during the onset of polymerisation (detected by carbon dioxide evolution). The suspension thus obtained was stirred at room temperature for a further 24 hours. The microcapsules were then filtered though a polyethylene frit (20 micron porosity) and the capsules washed on a filter bed according to the following sequence: deionised water (5 × 100 ml), ethanol (3 × 100 ml), hexane (3 × 100 ml), and finally dried in a vacuum oven at 50°C.

### Analytical Results:

ICP Analysis: 4.9% Pd wt/wt, Loading: 0.46 mmol/g (81 % Pd encapsulated)
0.16% P wt/wt, Loading: 0.05 mmol/g (94% P encapsulated)

Particle size Distribution: 60-390µm (average: 236 µm)

### Preparation of Catalyst Example 10 - Microencapsulated Pd(OAc)₂ with Co-Encapsulated 1,4-bis(diphenylphosphino)butane

Due to air-sensitive nature of ligand the organic phase was prepared in a glove box under a nitrogen atmosphere. The organic phase was formed from Pd(OAc)₂ (2.95g, 98%) dissolved in chloroform (25.7g) and then stirred for 10 minutes followed by addition of 1,4-bis(diphenylphosphino)butane (2.25g, 98%, 1:1 Pd:P) and then stirred for a further 30 minutes. To this mixture was added polymethylene polyphenylene di-isocyanate (PMPPI) (19.11g) and the contents stirred for a further 60 minutes. This organic phase mixture was then added to an aqueous phase containing 40% REAX 100 M solution (3.95g), 20% TERGITOL XD solution (1g) and 25% Poly Vinyl Alcohol (PVOH) solution (1.98g) in deionised water (83 ml) while shearing (using a FISHER 4-blade retreat-curve stirrer) at 500 rpm for 8 minutes. The reaction was maintained under inert atmosphere (N₂) throughout. After 8 minutes the shear rate was reduced to 250 rpm and few drops of de-foamer (DrewPLus S-4382) were added during the onset of polymerisation (detected by carbon dioxide evolution). The suspension thus obtained was stirred at room temperature for a further 24 hours. The microcapsules were then filtered though a polyethylene frit (20 micron porosity) and the capsules washed on a filter bed according to the following sequence: deionised water (5 × 100 ml), ethanol (3 × 100 ml), hexane (3 × 100 ml), and finally dried in a vacuum oven at 50°C.

### Analytical Results:

ICP Analysis: 5.4% Pd wt/wt, Loading: 0.51 mmol/g (82% Pd encapsulated)
1.5% P wt/wt, Loading: 0.48 mmol/g (89% P encapsulated)

Particle size Distribution: 60-495µm (average: 365 µm)

### Preparation of Catalyst Example 11 Microencapsulated Pd(OAc)₂ with Co-Encapsulated PPh₃

Due to air-sensitive nature of the ligand, the oil phase was prepared in a glove box. Pd(OAc)₂ (3.34g, 98%) was dissolved in chloroform (46.82g) and the solution stirred for 10 minutes. Triphenylphosphine (3.92g, 99%, 1:1 molar ratio Pd/PPh₃) was then added and the solution stirred for a further 30 minutes. To this mixture, polymethylene polyphenylene di-isocyanate (PMPPI) (17.59g) was added and the contents stirred for a further 60 minutes. The mixture was then added to a cooled (4°C) aqueous mixture under inert atmosphere (N₂) containing 40% REAX 100 M solution (5.73g), 20% TERGITOL XD solution (1.43g) and 25% Poly Vinyl Alcohol (PVOH) solution (2.87g) in deionised water (120 ml) while shearing (using a FISHER 4-blade retrieve-curve stirrer) at 500 rpm for 8 minutes. The shear rate was then reduced to 250 rpm and after being maintained at 4°C for 90 minutes, the temperature of the batch was gradually allowed to warm to room temperature. At the onset of polymerisation (12°C) a few drops of de-foamer (DrewPLus S-4382) were added. The suspension thus obtained was stirred at room temperature for 24 hours. The microcapsules were then filtered though a polyethylene frit (20 micron porosity) and the capsules washed on a filter bed according to the sequence: deionised water (5 × 100 ml), ethanol (3 × 100 ml), hexane (3 × 100 ml), and dried in a vacuum oven at 50°C.

### Analytical Results:

ICP Analysis: 6.4% Pd wt/wt, Loading: 0.6 mmol/g (97% Pd encapsulated)
1.9% P wt/wt, Loading: 0.6 mmol/g (98% P encapsulated)

Particle size Distribution: 60-300µm (average: 133 µm)

### Preparation of Comparative Catalyst Examples 12 - 17 Microencapsulated Pd(OAc)₂ Catalysts with Post Adsorbed PPh₃

In a 25ml round-bottom flask a sample of encapsulated palladium acetate prepared from Comparative Examples 1-6 (1g, 0.4mmol/g Pd) was added to 10ml THF and the mixture stirred for 30 minutes under inert (N₂) atmosphere. Triphenylphosphine ligand (7mg, 1:0.5 Pd:P molar ratio) was then added and the mixture allowed to stir overnight at room temperature. The beads were then filtered and washed with THF (5ml × 3) before being dried in a vacuum oven.

### Analytical Results:

ICP resuits on Examples 12 to 17:

| Example | Starting Catalyst Example | % Wall Content and Components | Pd level mmol/g (initial) | PPh₃ level mmol/g (maximum theoretical) |
|---|---|---|---|---|
| 12 | 1 | 40% (PMPPI) | 0.32 (0.4) | 0.05 (0.2) |
| 13 | 2 | 30% (PMPPI) | 0.34 (0.38) | 0.05 (0.2) |
| 14 | 3 | 20% (PMPPI) | 0.32 (0.39) | 0.11 (0.2) |
| 15 | 4 | 40% (PMPPI/MDI 1/1 ) | 0.42 (0.44) | 0.13 (0.2) |
| 16 | 5 | 40% (PMPPI/TDI 1/1) | 0.32 (0.33) | 0.01 (0.2) |
| 17 | 6 | 40% (PMPPI/Des W) | 0.4 (0.46) | 0.11 (0.2) |

### Preparation of Comparative Catalyst Example 18 - Microencapsulated Triphenyl Phosphine with Post adsorbed Pd(OAc)₂

Triphenylphosphine (2.70g, 99%) was dissolved in chloroform (32.7g, Aldrich 99%) and the solution stirred for a 10 minutes. To this mixture, polymethylene polyphenylene di-isocyanate (PMPPI) (19.11g) was added and the contents stirred for a further 60 minutes. The mixture was then added to an aqueous mixture containing 40% REAX 100 M solution (4.36g), 20% TERGOTIL XD solution (1.09g) and 25% Poly Vinyl Alcohol(PVOH) solution (2.18g) in deionised water (91 ml) while shearing (using a FISHER 4-blade retrieve-curve stirrer) at 500 rpm for 8 minutes. The reaction was maintained under inert atmosphere (N₂) throughout. The shear rate was then reduced to 250 rpm and few drops of de-foamer (DrewPLus S-4382) added during onset polymerisation. The dispersion thus obtained was stirred at room temperature for 24 hours. The microcapsules were then filtered (under N₂ blanket) though a polyethylene frit (20 micron porosity) and the capsules washed on the filter bed according to the sequence: deionised water (5 × 100 ml), ethanol (3 × 100 ml), hexane (3 × 100 ml), and finally dried in a vacuum oven at 50°C.

### Analytical Results:

ICP Analysis: 1.8% P wt/wt, Loading: 0.58 mmol/g (95% PPh₃ encapsulated)

Particle size Distribution: 60-320µm (average: 180 µm)

### Adsorption of Palladium acetate in to the Encapsulated PPh₃:

Pd(OAc)₂ (one molar equivalent on PPh₃) was dissolved in THF (10 ml) and the mixture stirred via magnetic stirrer for 10 minutes. To this solution the encapsulated PPh₃ beads prepared above were added the mixture allowed to stir at room temperature overnight. The beads were then filtered and washed successively with THF (10 × 10ml) before being dried in a vacuum oven at 30°C for 3 hours.

### Analytical Results:

ICP Analysis: 1.3% Pd wt/wt, Loading = 0.12 mmol/g (equates to approx 50% of Pd adsorbed into the beads) and 0.79% P wt/wt, Loading: 0.25 mmol/g PPh₃.

In conclusion ICP analysis indicated that 50% of the Pd(OAc)₂ was successfully loaded on to the PPh₃ beads, however approximately 50% of the initial PPh₃ was lost during this adsorption process.

### Preparation of Catalyst Example 19 - Microencapsulated Pd(OAc)₂ with Co-Encapsulated rac-2,2'-bis(diphenylphosphino)-1,1-binaphthyl, 1:0.5 ratio Pd:P

Due to air-sensitive nature of ligand the organic phase was prepared under a nitrogen atmosphere. The organic phase was formed from Pd(OAc)₂ (1.95g, 98%) dissolved in chloroform (43.0g) and then stirred for 10 minutes followed by addition of rac-2,2'-bis(diphenylphosphino)-1,1-binaphthyl (1.35g, 98%, 1:0.5 Pd:P) and then stirred for a further 20 minutes. To this mixture was added polymethylene polyphenylene di-isocyanate (PMPPI) (18.0g) and the contents stirred for a further 40 minutes. This organic phase mixture was then added to an aqueous phase, cooled to 1°C, containing 40% REAX 100 M solution (12.86g), 20% TERGITOL XD solution (6.43g) and 25% Poly Vinyl Alcohol (PVOH) solution (10.29g) in deionised water (108.0 ml) while shearing (using a FISHER 4-blade retreat-curve stirrer) at 500 rpm for 8 minutes. The reaction was maintained under inert atmosphere (N₂) throughout. After 8 minutes the shear rate was reduced to 250 rpm and few drops of de-foamer (DrewPLus S-4382) were added during the onset of polymerisation (detected by carbon dioxide evolution). The suspension thus obtained was stirred at 1°C for a further 1 ¼ hours, then warmed to room temperature (20°C) over 3 hours, maintained at room temperature for a further 16 hours then heated at 40°C for a further 2 hours. The microcapsules were cooled to room temperature, then filtered though a polyethylene frit (20 micron porosity) and the capsules washed on a filter bed according to the following sequence: deionised water (5 × 100 ml), DMF (2 × 50 ml), ethanol (2 × 50 ml), toluene (2 × 50 ml)hexane (3 × 100 ml), and finally dried in a vacuum oven at 50°C.

### Analytical Results:

ICP Analysis: 4.2% Pd wt/wt, Loading: 0.39 mmol/g (95% Pd encapsulated)
0.51% P wt/wt, Loading: 0.165 mmol/g P (82% P encapsulated)

Particle size Distribution: 60-340µm (average: 216 µm)

### Preparation of Catalyst Example 20 - Microencapsulated Pd(OAc)₂ with Co-Encapsulated rac-2,2'-bis(diphenylphosphino)-1,1-binaphthyl, 1:1 ratio Pd:P

Due to air-sensitive nature of ligand the organic phase was prepared in a glove box under a nitrogen atmosphere. The organic phase was formed from Pd(OAc)₂ (1.95g, 98%) dissolved in chloroform (43.75g) and then stirred for 10 minutes followed by addition of rac-2,2'-bis(diphenylphosphino)-1,1-binaphthyl (2.60g, 98%, 1:1 Pd:P) and then stirred for a further 20 minutes. To this mixture was added polymethylene polyphenylene di-isocyanate (PMPPI) (17.0g) and the contents stirred for a further 40 minutes. This organic phase mixture was then added to an aqueous phase, cooled to 1°C, containing 40% REAX 100 M solution (13.06g), 20% TERGITOL XD solution (6.53g) and 25% Poly Vinyl Alcohol (PVOH) solution (10.45g) in deionised water (109.7 ml) while shearing (using a FISHER 4-blade retreat-curve stirrer) at 500 rpm for 8 minutes. The reaction was maintained under inert atmosphere (N₂) throughout. After 8 minutes the shear rate was reduced to 250 rpm and few drops of de-foamer (DrewPLus S-4382) were added during the onset of polymerisation (detected by carbon dioxide evolution). The suspension thus obtained was stirred at 1°C for a further 1 ¼ hours, then warmed to room temperature (20°C) over 3 hours and maintained at room temperature for a further 16 hours. The microcapsules were then filtered though a polyethylene frit (20 micron porosity) and the capsules washed on a filter bed according to the following sequence: deionised water (6 × 100 ml), ethanol (4 × 100 ml), hexane (3 × 100 ml), and finally dried in a vacuum oven at 50°C.

### Analytical Results:

ICP Analysis: 4.2% Pd wt/wt, Loading: 0.39 mmol/g (97.5% Pd encapsulated)
1.2% P wt/wt, Loading: 0.39 mmol/g P (97.5% P encapsulated)

### Preparation of Catalyst Example 21 - Microencapsulated Pd(OAc)₂ with Co-Encapsulated 1,1'-bis(diphenyphosphino)ferrocene

Due to air-sensitive nature of ligand the organic phase was prepared in a glove box under a nitrogen atmosphere. The organic phase was formed from Pd(OAc)₂ (1.95g, 98%) dissolved in chloroform (43.75g) and then stirred for 10 minutes followed by addition of 1,1'-bis(diphenylphosphino)ferrocene (2.60g, 98%, 1:1 Pd:P) and then stirred for a further 20 minutes. To this mixture was added polymethylene polyphenylene di-isocyanate (PMPPI) (17.0g) and the contents stirred for a further 40 minutes. This organic phase mixture was then added to an aqueous phase, cooled to 1°C, containing 40% REAX 100 M solution (13.06g), 20% TERGITOL XD solution (6.53g) and 25% Poly Vinyl Alcohol (PVOH) solution (10.45g) in deionised water (109.7 ml) while shearing (using a FISHER 4-blade retreat-curve stirrer) at 500 rpm for 8 minutes. The reaction was maintained under inert atmosphere (N₂) throughout. After 8 minutes the shear rate was reduced to 250 rpm and few drops of de-foamer (DrewPLus S-4382) were added during the onset of polymerisation (detected by carbon dioxide evolution). The suspension thus obtained was stirred at 1°C for a further 1 ¼ hours, then warmed to room temperature (20°C) over 3 hours and maintained at room temperature for a further 16 hours. The microcapsules were then filtered though a polyethylene frit (20 micron porosity) and the capsules washed on a filter bed according to the following sequence: deionised water (6 × 100 ml), ethanol (4 × 100 ml), hexane (3 × 100 ml), and finally dried in a vacuum oven at 50°C.

### Analytical Results:

ICP Analysis: 4.6% Pd wt/wt, Loading: 0.43 mmol/g (100% Pd encapsulated)
1.2% P wt/wt, Loading: 0.39 mmol/g P (97.5% P encapsulated)

### Preparation of Catalyst Example 22 - Microencapsulated Pd(OAc)₂ with Co-Encapsulated 2-dicyclohexylphosphino-1,1'-biphenyl

Due to air-sensitive nature of ligand the organic phase was prepared under a nitrogen atmosphere. The organic phase was formed from Pd(OAc)₂ (1.50g, 98%) dissolved in chloroform (30g) and then stirred for 10 minutes followed by addition of 2-dicyclohexylphosphino-1,1'-biphenyl (1.91g, 98%, 1:0.82 Pd:P). To this mixture was added polymethylene polyphenylene di-isocyanate (PMPPI) (15.0g) and the contents stirred for a further 120 minutes. This organic phase mixture was then added to an aqueous phase, cooled to 1°C, containing 40% REAX 100 M solution (9.70g), 20% TERGITOL XD solution (4.85g) and 25% Poly Vinyl Alcohol (PVOH) solution (7.76g) in deionised water (81.48 ml) while shearing (using a FISHER 4-blade retreat-curve stirrer) at 500 rpm for 8 minutes. The reaction was maintained under inert atmosphere (N₂) throughout. After 8 minutes the shear rate was reduced to 160 rpm and few drops of de-foamer (DrewPLus S-4382) were added during the onset of polymerisation (detected by carbon dioxide evolution). The suspension thus obtained was stirred at 1°C for a further 30 minutes, then warmed to 8°C over 2 hours and held at this temperature for 18 hours, and then warmed to room temperature. The microcapsules were then filtered though a polyethylene frit (20 micron porosity) and the capsules washed on a filter bed according to the following sequence: deionised water (6 × 100 ml), DMF (2 × 100 ml), ethanol (2 × 100 ml), toluene (1 × 100 ml), hexane (2 × 100 ml), and finally dried in a vacuum oven at 50°C.

### Analytical Results:

ICP Analysis: 3.5% Pd wt/wt, Loading: 0.33 mmol/g (92% Pd encapsulated)
0.3% P wt/wt, Loading: 0.10 mmol/g P (34% P encapsulated)

### Preparation of Catalyst Example 23 - Microencapsulated Pd(OAc)₂ with Co-Encapsulated 2-dicyclohexylphosphino-2',4',6'-triisopropyl-1,1'-biphenyl

Due to air-sensitive nature of ligand the organic phase was prepared under a nitrogen atmosphere. The organic phase was formed from Pd(OAc)₂ (0.94g, 98%) dissolved in chloroform (27g) and then stirred for 10 minutes followed by addition of 2-dicyclohexylphosphino-2',4',6'-triisopropyl-1,1'-biphenyl (2.0g, 98%, 1:1 Pd:P). To this mixture was added polymethylene polyphenylene di-isocyanate (PMPPI) (10.0g) and the contents stirred for a further 120 minutes. This organic phase mixture was then added to an aqueous phase, cooled to 1°C, containing 40% REAX 100 M solution (7.99g), 20% TERGITOL XD solution (3.99g) and 25% Poly Vinyl Alcohol (PVOH) solution (6.39g) in deionised water (67.10 ml) while shearing (using a FISHER 4-blade retreat-curve stirrer) at 500 rpm for 8 minutes. The reaction was maintained under inert atmosphere (N₂) throughout After 8 minutes the shear rate was reduced to 160 rpm and few drops of de-foamer (DrewPLus S-4382) were added during the onset of polymerisation (detected by carbon dioxide evolution). The suspension thus obtained was stirred at 1°C for a further 30 minutes, then maintained at 5°C for 18 hours, warmed to 45°C and maintained at this temperature for a further 2 hours. The microcapsules were then filtered though a polyethylene frit (20 micron porosity) and the capsules washed on a filter bed according to the following sequence: deionised water (5 × 100 ml), DMF (2 × 50 ml), ethanol (2 × 50 ml), toluene (2 × 50 ml), hexane (2 × 50 ml), and finally dried in a vacuum oven at 50°C.

### Analytical Results:

ICP Analysis: 3.1% Pd wt/wt, Loading: 0.29 mmol/g (90.6% Pd encapsulated)
0.74% P wt/wt, Loading: 0.24 mmol/g P (75% P encapsulated)

### Preparation of Catalyst Comparative Example 24 - Microencapsulated Pd(OAc)₂ with Co-Encapsulated 1,3-bis(2,6-diisopropylphenyl)inidazoline chloride

The organic phase was formed from Pd(OAc)₂ (2.00g, 98%) dissolved in chloroform (42.0g) and then stirred for 10 minutes followed by addition of 1,3-bis(2,6-diisopropylphenyl)imidazoline chloride (1.90g, 1:0.5 Pd:ligand) and then stirred for a further 40 minutes. To this mixture was added polymethylene polyphenylene di-isocyanate (PMPPI) (17.0g) and the contents stirred for a further 2 hours. This organic phase mixture was then added to an aqueous phase, cooled to 1°C, containing 40% REAX 100 M solution (12.58g), 20% TERGITOL XD solution (6.29g) and 25% Poly Vinyl Alcohol (PVOH) solution (10.06g) in deionised water (105.7 ml) while shearing (using a FISHER 4-blade retreat-curve stirrer) at 500 rpm for 8 minutes. The reaction was maintained under inert atmosphere (N₂) throughout. After 8 minutes the shear rate was reduced to 225 rpm and few drops of de-foamer (DrewPLus S-4382) were added during the onset of polymerisation (detected by carbon dioxide evolution). The suspension thus obtained was stirred at 1°C for a further 1 hour, then warmed to room temperature (20°C) over 3 hours and maintained at room temperature for a further 16 hours. The microcapsules were then filtered though a polyethylene frit (20 micron porosity) and the capsules washed on a filter bed according to the following sequence: deionised water (5 × 100 ml), ethanol (3 × 100 ml), hexane (2 × 100 ml), and finally dried in a vacuum oven at 50°C.

### Analytical Results:

ICP Analysis: 4.6% Pd wt/wt, Loading: 0.43 mmol/g (100% Pd encapsulated)

Particle size Distribution: average: 200 µm

### Preparation of Comparative Catalyst Example 25 - Microencapsulated acetato(2'-di-t-butylphosphino-1-1'-biphenyl-2-yl)palladium(II)

The organic phase was prepared under a nitrogen atmosphere. The organic phase was formed from acetato(2'-di-t-butylphosphino-1-1'-biphenyl-2-yl)palladium(II) (1.00g, 98%) dissolved in chloroform (22.3g) followed by addition of polymethylene polyphenylene di-isocyanate (PMPPI) (10.0g) and the contents stirred for a further 90 minutes. This organic phase mixture was then added to an aqueous phase, cooled to 1°C, containing 40% REAX 100 M solution (6.66g), 20% TERGITOL XD solution (3.33g) and 25% Poly Vinyl Alcohol (PVOH) solution (5.33g) in deionised water (55.94 ml) while shearing (using a FISHER 4-blade retreat-curve stirrer) at 500 rpm for 8 minutes. The reaction was maintained under inert atmosphere (N₂) throughout. After 8 minutes the shear rate was reduced to 160 rpm and few drops of de-foamer (DrewPLus S-4382) were added during the onset of polymerisation (detected by carbon dioxide evolution). The suspension thus obtained was stirred at 1°C for a further 30 minutes, then warmed to 25°C, held at this temperature for 18 hours, warmed to 40°C and maintained at this temperature for a further 2 hours. The microcapsules were then filtered though a polyethylene frit (20 micron porosity) and the capsules washed on a filter bed according to the following sequence: deionised water (5 × 100 ml), DMF (2 × 50 ml), ethanol (2 × 50 ml), toluene (2 × 50 ml), hexane (2 × 50 ml), and finally dried in a vacuum oven at 50°C.

### Analytical Results:

ICP Analysis: 2.0% Pd wt/wt, Loading: 0.19 mmol/g (95% Pd encapsulated)
0.45% P wt/wt, Loading: 0.145 mmol/g P (72.5% P encapsulated)

### Catalyst Evaluations

### General Procedure for Suzuki type reactions using Encapsulated Palladium Acetate

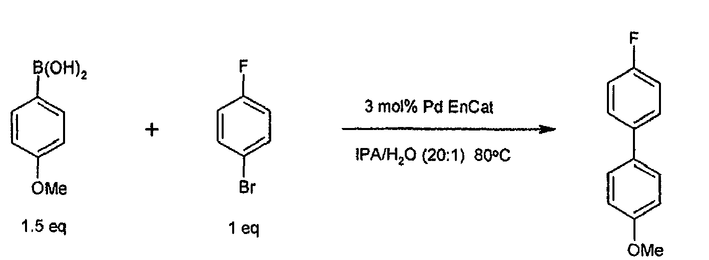

A 25 ml three-necked round-bottom flask equipped with a condenser was charged with 4-methoxyphenylboronic acid (0.26g, 1.72 mmol, 1.5 eq), 4-bromofluorobenzene (0.20g, 1.14 mmol, 1 eq), potassium carbonate (0.47g, 3.42 mmol, 3 eq) and 10 ml of IPA/H₂O (20:1). To this, microencapsulated palladium acetate prepared in Comparative Example 1 (0.08g, 3 mol%, Pd loading 0.4 mmol/g) was added. The mixture was stirred with a magnetic follower and heated to 80°C using an oil bath. The progress of the reaction was monitored by taking samples of reaction mixture at regular time intervals and analysing by HPLC. The mixture was then filtered through a sintered funnel and the solid catalystwashed with acetone and ether respectively. The filtrate was concentrated on a rotary evaporator without further work up. ICP Analysis:revealed the reaction mixture to have <3 ppm Pd which equates to less than 0.1% of the palladium leached from the catalyst and the crude product to contain <20 ppm palladium.

The table below shows the level of conversion to product at timed intervals using a quantitative HPLC method. For the comparative catalyst Example 1 the table reveals an initial rapid reaction, which progressively slows down over the course of reaction achieving 70% product after 5 hours. ICP analysis showed Pd levels in reaction mixture and crude product to be <3 ppm and <20 ppm respectively.

| **Time (minutes)** | **Conversion (%)** |
|---|---|
| 0 | 0 |
| 5 | 12.5 |
| 10 | 29.6 |
| 15 | 33.3 |
| 20 | 35.6 |
| 25 | 38.1 |
| 30 | 40.8 |
| 35 | 41.2 |
| 40 | 41.8 |
| 45 | 44.6 |
| 95 | 57.7 |
| 155 | 63.4 |
| 255 | 68.6 |
| 285 | 71.1 |

Following the same experimental procedure reaction profiles for Comparative Catalyst Examples 2 to 6 were produced.

The table below shows the conversion/time profiles for comparative catalyst Examples 1, 2 and 3 with wall contents 40, 30 and 20% respectively. The catalytic activity is significantly increased for both the 30% and 20% Pd EnCat™ against the standard 40% wall catalyst (Comparative Example 1).

| | **Yield (%)** | | |
|---|---|---|---|
| **Time (hours)** | **Catalyst Example 1** | **Catalyst Example 2** | **Catalyst Example 3** |
| 0 | 0 | 0 | 0 |
| 1 | 24.89 | 56.47 | 34.27 |
| 3 | 42.52 | 82 | 60.86 |
| 5 | 53.1 | 86.21 | 74.74 |
| 7 | 59.8 | 90.01 | 88.73 |
| 20 | 70.04 | 95.4 | 88.91 |

ICP Analysis on crude reaction products from comparative catalyst Examples 1, 2 and 3 showed <20ppm, <20 ppm and <15 ppm Pd respectively.

The table below shows the conversion/time profiles for comparative catalyst Examples 1 and 4 where Catalyst 4 has a polyurea wall with reduced crosslink density. As can be seen the catalytic activity is significantly increased for catalyst Example 4 compared the standard 40% wall comparative catalyst Example 1).

| | **Yield (%)** | |
|---|---|---|
| **Time (hours)** | **Example 1** | **Example 4** |
| 0 | 0 | 0 |
| 1 | 24.89 | 40.69 |
| 3 | 42.52 | 72.41 |
| 5 | 53.1 | 86.42 |
| 7 | 59.8 | 86.64 |
| 20 | 70.04 | 86.85 |

### General Procedure for Suzuki reactions using Encapsulated Palladium Acetate where Phosphine Ligand is Post Added - Comparative example

To a solution of the aryl bromide (1 mmol) in isopropyl alcohol was added a solution of the boronic acid (1.5 mmol) and potassium carbonate (3 mmol) in isopropanol/water (20:1, 10 ml). To this mixture was added encapsulated palladium acetate (from comparative examples 1 to 6) (0.08g, 3 mol%) followed by addition of triphenyl phosphine at either 1/1, or 1/2 or 1/4 Pd/PPh₃ molar equivalents. The reaction was maintained under inert (N₂) atmosphere and the mixture stirred at 80°C. The progress of the reaction was monitored by taking samples of reaction mixture at regular time intervals and analysing by HPLC. The mixture was then filtered through a sintered funnel and the solid catalyst washed with acetone and ether respectively. The filtrate was concentrated on a rotary evaporator without further work up. The crude product was then analysed for Pd content by ICP.

The table below shows reaction yield / time profiles at a number of different molar ratios of PPh₃ to palladium for microencapsulated comparative catalyst Example 1. The table reveal that addition of PPh₃ significantly increases both the rate and extent of reaction. An induction period is observed followed by rapid reaction to achieve quantitative product yields. The induction period is thought to relate to the time for the ligand to diffuse through the polyurea matrix to the active metal sites.

| | **Yield %** | | | |
|---|---|---|---|---|
| **Time (hours)** | **Molar Ratio PPh₃/Pd 1:1** | **Molar Ratio PPh₃/Pd 1:2** | **Molar Ratio PPh₃/Pd 1:4** | **No PPh₃** |
| 0 | 0 | 0 | 0 | 0 |
| 0.75 | 0.34 | 0.13 | 0 | 26.42 |
| 2 | 0.86 | 0.73 | 0.47 | 39.48 |
| 3.5 | 31.03 | 1.3 | 0.98 | 51.8 |
| 6 | 82.3 | 4.57 | 3.1 | 53.45 |
| 20 | 92.4 | 95.3 | 90.7 | 67.41 |

### Comparison of Catalytic Activity of Microencapsulated Palladium Acetate with Co-Encapsulated PPh₃ (Example 7) and P(Tolyl)₃ (Example 9) with Comparative Catalyst Example 1.

Catalyst Example 7 (0.06g, 3mol%) was added to a solution of 4-bromo fluorobenzene (1 mmol), 4-methoxy phenyl boronic acid (1.5 mmol) and potassium carbonate (3 mmol) in isopropanol/water (20:1, 10 ml). The reaction was maintained under inert (N₂) atmosphere and the mixture stirred at 80°C. The progress of the reaction was monitored by taking samples of reaction mixture at regular time intervals and analysing by HPLC. The mixture was then filtered through a sintered funnel and the catalyst washed with acetone and ether respectively. The filtrate was concentrated on a rotary evaporator without further work up and the crude product analysed for palladium and phosphorus content by ICP: <30 ppm and <15 ppm, respectively.

The same procedure was followed for catalyst Example 9 and comparative catalyst Example 1.

Conversion/Time data recorded for the 3 catalysts are presented in the table below:

| | **Conversion to product (%)** | | |
|---|---|---|---|
| **Time (hours)** | **Catalyst Example 1** | **Catalyst Example 7** | **Catalyst Example 9** |
| 0 | 0 | 0 | 0 |
| 1 | 24.89 | 49.98 | 51.94 |
| 3 | 42.52 | 82.16 | 78.92 |
| 5 | 53.1 | 98.08 | 91.41 |
| 7 | 59.8 | 98.14 | 94.83 |
| 20 | 70.04 | 98.42 | 95.1 |

It can be concluded that both catalysts with co-encapsulated PAr₃ ligands demonstrate higher levels of catalytic activity compared to comparative catalyst of Example 1.

ICP analysis of the crude reaction mixtures for catalysts Examples 1, 7 and 9 showed palladium levels at <3ppm, <5ppm and <5ppm, respectively.

The same procedure was followed to produce conversion/time data for catalyst Example 8 where the level of PPh₃ has been reduced to 0.1/1 PPh₃/Pd molar equivalents:

| | **% conversion to product** | |
|---|---|---|
| **Time (hours)** | **Catalyst Example 1** | **Catalyst Example 8** |
| 0 | 0 | 0 |
| 1 | 24.89 | 49.34 |
| 3 | 42.52 | 90.16 |
| 5 | 53.1 | 94.26 |
| 7 | 59.8 | 98.36 |
| 20 | 70.04 | 98.67 |

This catalyst still gives enhanced catalytic activity over comparative Example 1. ICP analysis of crude product showed Pd and P levels to be <30 ppm and <18 ppm, respectively.

The same procedure was followed to produce conversion/time profile for catalyst Example 10 where bis(diphenylphosphino)butane was co-encapsulated. Comparison of reaction profile for comparative Example 1 and Example 10 clearly illustrated the dramatic improvement in activity of catalyst Example 10 with quantitative yield within 3 to 5 hours. For catalyst Example 10 ICP analysis of crude product showed Pd and P levels to be 19 ppm and 50 ppm, respectively.

| **Time** | **% conversion to product** | |
|---|---|---|
| **(hours)** | **Catalyst Example 1** | **Catalyst Example 10** |
| 0 | 0 | 0 |
| 1 | 24.89 | 86.61 |
| 3 | 42.52 | 96.17 |
| 5 | 53.1 | 98.05 |
| 7 | 59.8 | 98.59 |
| 20 | 70.04 | 99.2 |

### Experiment to Assess the Influence of Storage Conditions and Ageing on Catalyst Activity

Due to presence of oxidatively labile phosphine ligands the following experiment was carried out to determine the storage stability of the co-encapsulated catalysts of type Examples 7 to 10.

A sample of catalyst Example 7 was stored under air for 3 months and then its catalytic activity compared with 'fresh' catalyst in a standard Suzuki coupling reaction. Similarly, a sample of the catalyst was subjected to accelerated ageing by warming to 52°C in an oven for 24 hours and its catalytic activity determined. Activity was assessed by monitoring conversion/time profiles for these aged catalysts in a Suzuki reaction according to the method above. The reaction results are presented in the table below:

| | **Yield %** | | | |
|---|---|---|---|---|
| **Time (hours)** | **Catalyst Example 1** | **Catalyst Example 7 (freshly prepared)** | **Catalyst Example 7 (After 3 months storage)** | **Catalyst Example 7 (After accelerated ageing)** |
| 0 | 0 | 0 | 0 | 0 |
| 1 | 24.89 | 49.98 | 41.29 | 26.47 |
| 3 | 42.52 | 82.16 | 67.54 | 61.76 |
| 5 | 53.1 | 98.08 | 73 | 71.42 |
| 7 | 59.8 | 98.14 | 75.84 | 79.46 |
| 20 | 70.04 | 98.42 | 83.75 | 87.5 |

Catalyst Example 7 shows some loss of activity after storing in air for a 3 month period, however, the catalyst still remains more active then the comparative catalyst Example 1. Similarly accelerated ageing of Catalyst 7 at 52°C for 24 hours results in a similar partial loss in activity.

ICP Analysis of crude products for the room temperature and 52°C aged catalyst show Pd and P levels to be <20 ppm and <30 ppm, respectively.

## Claims

1. A microencapsulated catalyst-ligand system comprising a transition metal catalyst and a ligand microencapsulated within a permeable polymer microcapsule shell, wherein the microcapsule shell is formed by interfacial polymerisation and wherein the ligand is encapsulated along with the transition metal catalyst as a component of the organic phase,
wherein the transition metal catalyst is platinum, palladium, osmium, ruthenium, rhodium, iridium, cobalt, iron and nickel,
wherein the ligand is an organic moiety comprising one or more P atoms,
wherein the permeable polymer microcapsule shell is the product of self-condensation and/or cross-linking of etherified urea-formaldehyde resins or prepolymers in which from about 50 to about 98% of the methylol groups have been etherified with a C₄-C₁₀ alcohol, or
wherein the permeable polymer microcapsule shell is a polyurea microcapsule prepared from at least one polyisocyanate and/or tolylene diisocyanate.

2. A microencapsulated catalyst-ligand system according to claim 1, wherein when the permeable polymer microcapsule shell is a polyurea microcapsule prepared from at least one polyisocyanate and/or toluene diisocyanate, the polyisocyanates and/or tolylene diisocyanates are selected from the group consisting of 1-chloro-2,4-phenylene diisocyante, m-phenylene diisocyante (and its hydrogenated derivative), p-phenylene diisocyante (and its hydrogenated derivative), 4,4'-methylenebis(phenyl isocyanate), 2,4-tolylene diisocyanate, tolylene diisocyanate (60% 2,4-isomer, 40% 2,6-isomer), 2,6-tolylene diisocyante, 3,3'-dimethyl-4,4'-biphenylene diisocyante, 4,4'-methylenebis (2-methylphenyl isocyanate), 3,3'-dimethoxy-4,4'-biphenylene diisocyanate, 2,2',5,5'-tetramethyl-4,4'-biphenylene diisocyanate, 80% 2,4- and 20% 2,6-isomer of tolylene diisocyanate, polymethylene polyphenylisocyante (PMPPI), 1,6-hexamethylene diisocyanate, isophorone diisocyanate, tetramethylxylene diisocyanate and 1,5-naphthylene diisocyanate.

3. A microencapsulated catalyst-ligand system according to claim 1 or claim 2 wherein the transition metal is palladium.

4. A microencapsulated ligand system according to claim 3, wherein the palladium is in the form of an organic solvent soluble form of palladium.

5. A microencapsulated ligand system according to claim 4, wherein the palladium is in the form of palladium acetate.

6. A microencapsulated catalyst-ligand system according to any preceding claim wherein the ligand is an organic ligand of formula (1):
PR¹R²R³ (1)
wherein:
R¹, R² and R³ are each independently an optionally substituted hydrocarbyl group, an optionally substituted hydrocarbyloxy group, or an optionally substituted hetrocyclyl group or one or more of R¹ & R², R¹ & R³,
R² & R³ optionally being linked in such a way as to form an optionally substituted ring(s).

7. A microencapsulated catalyst-ligand system according to claim 6, wherein the ligand is PMe₂CF₃, P(OEt)₃, P(Et)₃, P(Bu)₃, P(cyclohexyl)₃, PPhEt₂, PPh₂Me, PPh₃, P(CH₂Ph)₃, P(CH₂Ph)Ph₂, P(*p*-tolyl)₃, P(*o*-C₆H₄OMe)₃, P(OPh)₃, P(O-*p*-tolyl)₃, P(*p*-C₆H₄OMe)₃, P(*o*-tolyl)₃, P(*m*-tolyl)₃, PMe₃, PPhMe₂, PPh₂Et, P(*i*-Pr)₃, P(*t*-Bu)₃, PPhCH₂Ph, PPh₂OEt, PPh(OEt)₂, P(O-*o*-tolyl)₃, P(OMe)₃, P(*n*-Pr)₃, PPh(*i*-Pr)₂, PPh₂(*i*-Pr), PPhBu₂, PPh₂Bu, P(*i*-Bu)₃, PPh(cyclohexyl)₂, PPh₂(cyclohexyl), P(CH₂Ph)₂Et, P(CH₂Ph)Et₂, P(C₆F₅)Ph₂, P(*p*-C₆H₄F)₃, P(*p*-C₆H₄Cl)₃, P(C₆F₅)₂Ph, P(*o*-C₆H₄F)₃, P(*o*-C₆H₄Cl)₃, P(2-furanyl)₃, P(2-thienyl)₃, P(*n*-octyl)₃, P(*p*-C₆H₄NO₂)₃, 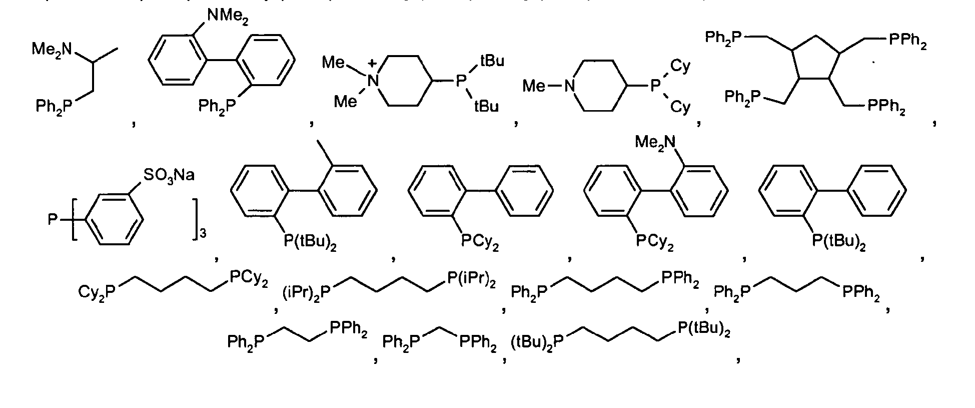 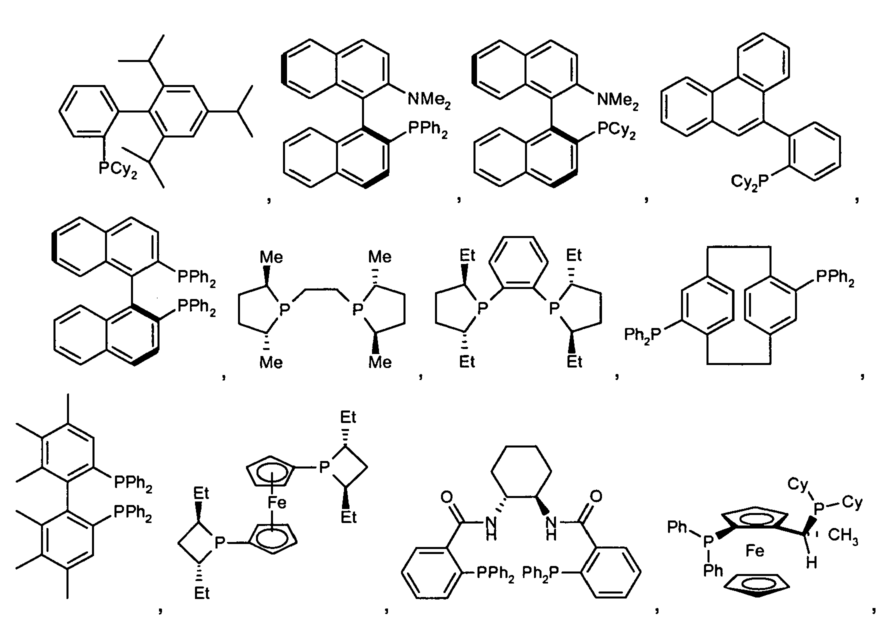 or 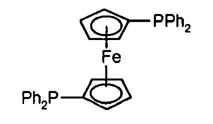 where Cy = cyclohexyl.

8. A process for the preparation of a microencapsulated catalyst-ligand system which comprises forming a microcapsule shell by interfacial polymerisation in the presence of a transition metal catalyst and a ligand that is an organic moiety comprising one or more P atoms, which comprises
(a) dissolving or dispersing the catalyst and ligand in a first phase,
(b) dispersing the first phase in a second, continuous phase to form an emulsion, wherein the first phase is an organic phase and the second, continuous phase is an aqueous phase,
(c) reacting one or more microcapsule wall-forming materials at the interface between the dispersed first phase and the continuous second phase to form a microcapsule polymer shell encapsulating the dispersed first phase core and optionally
(d) recovering the microcapsules from the continuous phase,
wherein the transition metal catalyst is platinum, palladium, osmium, ruthenium, rhodium, iridium, cobalt, iron and nickel, and
wherein the wall-forming materials comprise at least one polyisocyanate and/or tolylene diisocyanate, or
wherein the wall-forming materials comprise etherified urea-formaldehyde resins or prepolymers in which from about 50 to about 98% of the methylol groups have been etherified with a C₄-C₁₀ alcohol.

9. A process according to claim 8, wherein when the permeable polymer microcapsule shell is a polyurea microcapsule prepared from at least one polyisocyanate and/or toluene diisocyanate, the polyisocyanates and/or tolylene diisocyanates are selected from the group consisting of 1-chloro-2,4-phenylene diisocyante, m-phenylene diisocyante (and its hydrogenated derivative), p-phenylene diisocyante (and its hydrogenated derivative), 4,4'-methylenebis(phenyl isocyanate), 2,4-tolylene diisocyanate, tolylene diisocyanate (60% 2,4-isomer, 40% 2,6-isomer), 2,6-tolylene diisocyante, 3,3'-dimethyl-4,4'-biphenylene diisocyante, 4,4'-methylenebis (2-methylphenyl isocyanate), 3,3'-dimethoxy-4,4'-biphenylene diisocyanate, 2,2',5,5'-tetramethyl-4,4'-biphenylene diisocyanate, 80% 2,4- and 20% 2,6-isomer of tolylene diisocyanate, polymethylene polyphenylisocyante (PMPPI), 1,6-hexamethylene diisocyanate, isophorone diisocyanate, tetramethylxylene diisocyanate and 1,5-naphthylene diisocyanate.

10. A process according to claim 8 or 9, wherein the wall-forming materials comprise a crosslinking reagent.

11. A process according to any of claims 8 to 10, wherein the catalyst is a transition metal catalyst wherein the transition metal is palladium.

12. A process according to claim 11, wherein the palladium is in the form of an organic solvent soluble form of palladium.

13. A process according to claim 12, wherein the palladium is in the form of palladium acetate.

14. A process according to any one of claims 8 to 13, wherein the ligand is an organic ligand of formula (1):
PR¹R²R³ (1)
wherein:
R¹, R² and R³ are each independently an optionally substituted hydrocarbyl group, an optionally substituted hydrocarbyloxy group, or an optionally substituted hetrocyclyl group or one or more of R¹ & R², R¹ & R³,
R² & R³ optionally being linked in such a way as to form an optionally substituted ring(s).

15. A process according to claim 14, wherein the ligand is PMe₂CF₃, P(OEt)₃, P(Et)₃, P(Bu)₃, P(cyclohexyl)₃, PPhEt₂, PPh₂Me, PPh₃, P(CH₂Ph)₃, P(CH₂Ph)Ph₂, P(*p*-tolyl)₃, P(*o-*C₆H₄OMe)₃, P(OPh)₃, P(O-*p*-tolyl)₃, P(*p*-C₆H₄OMe)₃, P(*o*-tolyl)₃, P(*m*-tolyl)₃, PMe₃, PPhMe₂, PPh₂Et, P(*i*-Pr)₃, P(*t*-Bu)₃, PPhCH₂Ph, PPh₂OEt, PPh(OEt)₂, P(O-*o*-tolyl)₃, P(OMe)₃, P(*n*-Pr)₃, PPh(*i*-Pr)₂, PPh₂(*i*-Pr), PPhBu₂, PPh₂Bu, P(*i*-Bu)₃, PPh(cyclohexyl)₂, PPh₂(cyclohexyl), P(CH₂Ph)₂Et, P(CH₂Ph)Et₂, P(C₆F₅)Ph₂, P(*p*-C₆H₄F)₃, P(*p*-C₆H₄Cl)₃, P(C₆F₅)₂Ph, P(*o*-C₆H₄F)₃, P(*o*-C₆H₄Cl)₃, P(2-furanyl)₃, P(2-thienyl)₃, P(*n*-octyl)₃, P(*p-*C₆H₄NO₂)₃, 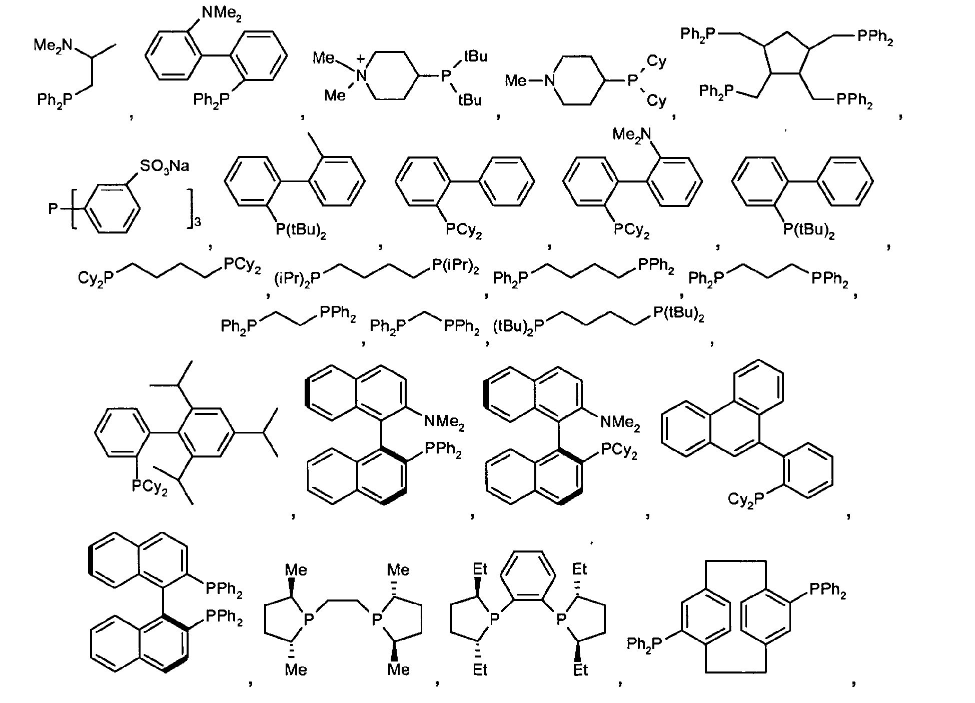 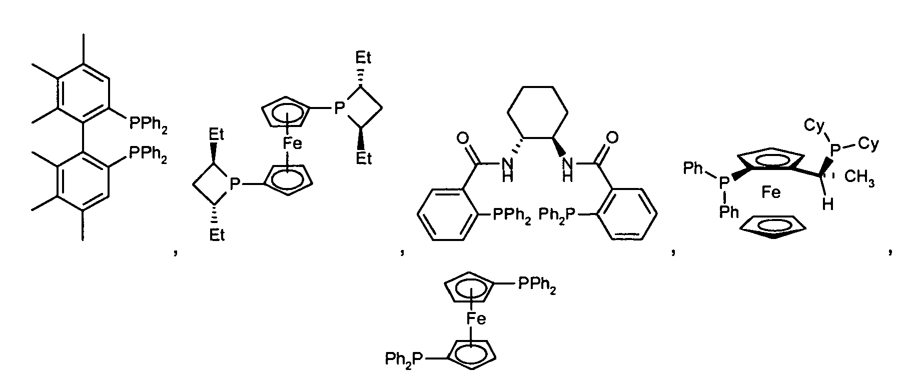 or
where Cy = cyclohexyl.

## Patentansprüche

1. Mikroverkapseltes Katalysator-Ligand-System, welches, innerhalb einer durchlässigen polymeren Mikrokapselhülle mikroverkapselt, einen Übergangsmetallkatalysator und einen Liganden umfasst, wobei die Mikrokapselhülle durch Grenzflächenpolymerisation gebildet ist und wobei der Ligand zusammen mit dem Übergangsmetallkatalysator als Komponent der organischen Phase verkapselt ist,
wobei der Übergangsmetallkatalysator Platin, Palladium, Osmium, Ruthenium, Rhodium, Iridium, Kobalt, Eisen und Nickel ist,
wobei der Ligand eine organische Gruppe ist, welche ein oder mehr P-Atome umfasst,
wobei die durchlässige polymere Mikrokapselhülle das Produkt der Selbstkondensation und/oder Vernetzung veretherter Harnstoff-Formaldehyd-Harze oder Prepolymere ist, bei welchen von etwa 50 bis etwa 98% der Methylolgruppen mit einem C₄-C₁₀-Alkohol verethert ist, oder
wobei die durchlässige polymere Mikrokapselhülle eine aus zumindest einem Polyisocyanat und/oder Toluylendiisocyanat hergestellte Polyharnstoff-Mikrokapsel ist.

2. Mikroverkapseltes Katalysator-Ligand-System nach Anspruch 1, wobei, wenn die durchlässige polymere Mikrokapselhülle eine aus zumindest einem Polyisocyanat und/oder Toluylendiisocyanat hergestellte Polyharnstoff-Mikrokapsel ist, die Polyisocyanate und/oder Toluylendiisocyanate aus der Gruppe ausgewählt werden, welche besteht aus 1-Chlor-2,4-phenylendiisocyanat, m-Phenylendiisocyanat (und seinem hydrierten Derivat), p-Phenylendiisocyanat (und seinem hydrierten Derivat), 4,4'-Methylenbis(phenylisocyanat), 2,4-Toluylendiisocyanat, Toluylendiisocyanat (60% 2,4-Isomer, 40% 2,6-Isomer), 2,6-Toluylendiisocyanat, 3,3'-Dimethyl-4,4'-biphenylendiisocyanat, 4,4'-Methylenbis (2-methylphenylisocyanat), 3,3'-Dimethoxy-4,4'-biphenylendiisocyanat, 2,2',5,5'-Tetramethyl-4,4'-biphenylendiisocyanat, 80% 2,4- und 20% 2,6-Isomer von Toluylendiisocyanat, Polymethylenpolyphenylisocyanat (PMPPI), 1,6-Hexamethylendiisocyanat, Isophorondiisocyanat, Tetramethylxylendiisocyanat und 1,5-Naphthylendiisocyanat.

3. Mikroverkapseltes Katalysator-Ligand-System nach Anspruch 1 oder Anspruch 2, wobei das Übergangsmetall Palladium ist.

4. Mikroverkapseltes Katalysator-Ligand-System nach Anspruch 3, wobei das Palladium in Form einer durch ein organisches Lösungsmittel löslichen Form von Palladium vorliegt.

5. Mikroverkapseltes Katalysator-Ligand-System nach Anspruch 4, wobei das Palladium in Form von Palladiumacetat vorliegt.

6. Mikroverkapseltes Katalysator-Ligand-System nach einem beliebigen vorangehenden Anspruch, wobei der Ligand ein organischer Ligand der Formel (1):
PR¹R²R³ (1)
ist, wobei:
R¹, R² und R³ jeweils voneinander unabhängig eine gegebenenfalls substituierte Hydrocarbylgruppe, eine gegebenenfalls substituierte Hydrocarbyloxygruppe oder eine gegebenenfalls substituierte Heterocyclylgruppe sind oder einer oder mehr von R¹ & R²,
R¹ & R³, R² & R³ gegebenenfalls so verbunden sind, dass sie (einen) gegebenenfalls substituierte(n) Ring(e) bilden.

7. Mikroverkapseltes Katalysator-Ligand-System nach Anspruch 6, wobei der Ligand PMe₂CF₃, P(OEt)₃, P(Et)₃, P(Bu)₃, P(cyclohexyl)₃, PPhEt₂, PPh₂Me, PPh₃, P(CH₂Ph)₃, P(CH₂Ph)₂, P(*p*-tolyl)₃, P(*o*-C₆H₄OMe)₃, P(OPh)₃, P(O-*p*-tolyl)₃, P(*p*-C₆H₄OMe)₃, P(*o*-tolyl)₃, P(*m*-tolyl)₃, PMe₃, PPhMe₂, PPh₂Et, P(*i*-Pr)₃, P(*t*-Bu)₃, PPhCH₂Ph, PPh₂OEt, PPh(OEt)₂, P(O-*o*-tolyl)₃, P(OMe)₃, P(*n*-Pr)₃, PPh(*i*-Pr)₂, PPh₂(*i*-Pr), PPhBu₂, PPh₂Bu, P(*i*-Bu)₃, PPh(cyclohexyl)₂, PPh₂(cyclohexyl), P(CH₂Ph)₂Et, P(CH₂Ph)Et₂, P(CeF₅)Ph₂, P(*p*-C₆H₄F)₃, P(*p*-C₆H₄Cl)₃, P(C₆F₅)₂Ph, P(*o-*C₆H₄F)₃, P(*o*-C₆H₄Cl)₃, P(2-furanyl)₃, P(2-thienyl)₃, P(*n*-octyl)₃, P(*p-*C₆H₄NO₂)₃, 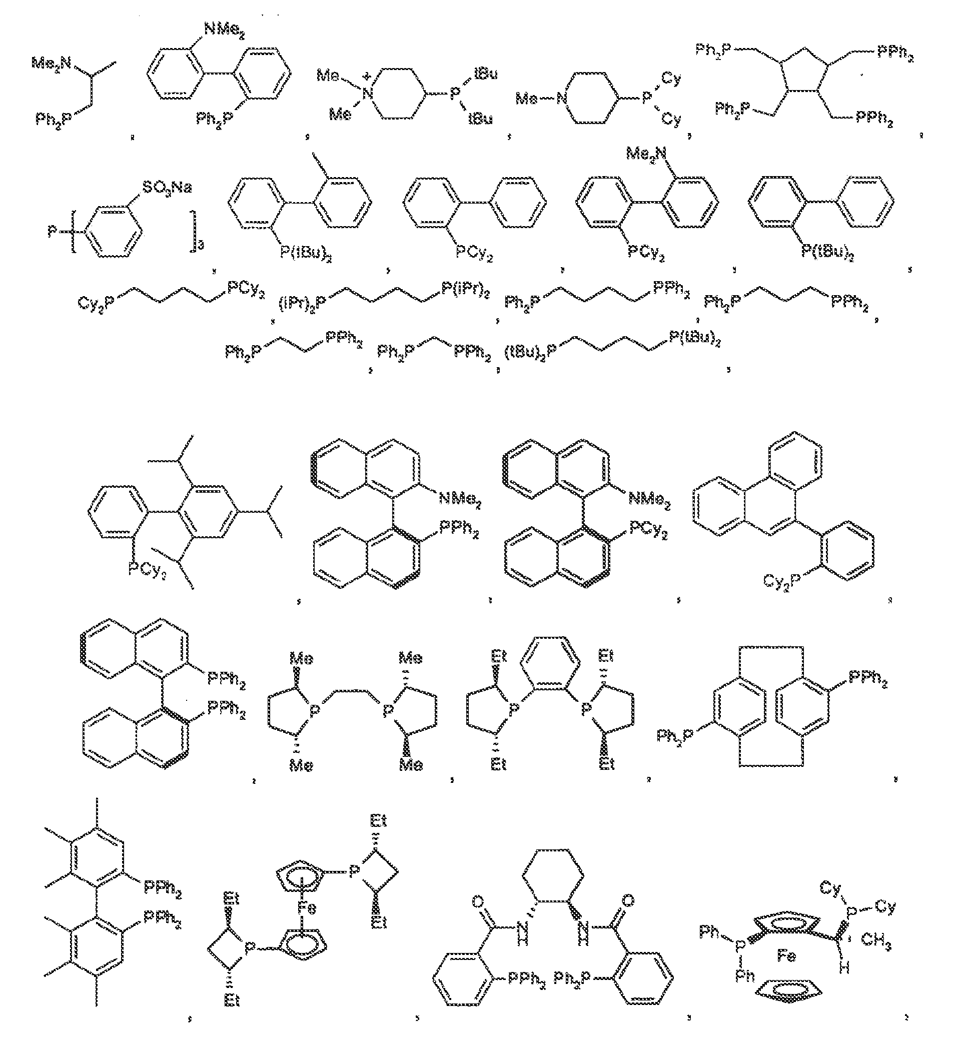 oder 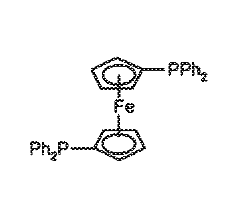 ist, wobei Cy = cyclohexyl.

8. Verfahren zur Herstellung eines mikroverkapselten Katalysator-Ligand-Systems, welches die Bildung einer durchlässigen polymeren Mikrokapselhülle durch Grenzflächenpolymerisation in Gegenwart eines Übergangsmetalikatalysators und eines Liganden umfasst, welcher eine ein oder mehr P-Atome umfassende organische Gruppe ist, wobei das Verfahren Folgendes umfasst;
(a) Auflösen oder Dispergieren des Katalysators und Liganden in einer ersten Phase,
(b) Dispergieren der ersten Phase in einer zweiten, kontinuierlichen Phase zur Bildung einer Emulsion, wobei die erste Phase eine organische Phase ist und die zweite, kontinuierliche Phase eine wässrige Phase ist,
(c) Reagieren eines oder mehr wandbildender Mikrokapsel-Materialien an der Grenzfläche zwischen der dispergierten ersten Phase und der kontinuierlichen zweiten Phase zur Bildung einer polymeren Mikrokapsel-Hülle, welche den dispergierten ersten Phasenkern verkapselt, und gegebenenfalls
(d) Rückgewinnen der Mikrokapseln aus der kontinuierlichen Phase,
wobei der Ubergangsmetallkatalysator Platin, Palladium, Osmium, Ruthenium, Rhodium, Iridium, Kobalt, Eisen und Nickel ist, und
wobei die wandbildenden Materialien zumindest ein Polyisocyanat und/oder Toluylendiisocyanat umfassen, oder
wobei die wandbildenden Materialien veretherte Harnstoff-Formaldehyd-Harze oder Prepolymere umfassen, bei welchen von etwa 50 bis etwa 98% der Methylolgruppen mit einem C₄-C₁₀-Alkohol verethert wurden.

9. Verfahren nach Anspruch 8, wobei, wenn die durchlässige polymere Mikrokapselhülle eine aus zumindest einem Polyisocyanat und/oder Toluylendiisocyanat hergestellte Polyharnstoff-Mikrokapsel ist, die Polyisocyanate und/oder Toluylendiisocyanate aus der Gruppe ausgewählt werden, welche besteht aus 1-Chlor-2,4-phenylendiisocyanat, m-Phenylendiisocyanat (und seinem hydrierten Derivat), p-Phenylendiisocyanat (und seinem hydrierten Derivat), 4,4'-Methylenbis(phenylisocyanat), 2,4-Toluylendiisocyanat, Toluylendiisocyanat (60% 2,4-Isomer, 40% 2,6-Isomer), 2,6-Toluylendiisocyanat, 3,3'-Dimethyl-4,4'-biphenylendiisocyanat, 4,4'-Methylenbis (2-methylphenylisocyanat), 3,3'-Dimethoxy-4,4'-biphenylendiisocyanat, 2,2',5,5'-Tetramethyl-4,4'-biphenylendiisocyanat, 80% 2,4- und 20% 2,6-Isomer von Toluylendiisocyanat, Polymethylenpolyphenylisocyanat (PMPPI), 1,6-Hexamethylendiisocyanat, Isophorondiisocyanat, Tetramethylxylendiisocyanat und 1,5-Naphthylendiisocyanat.

10. Verfahren nach Anspruch 8 oder 9, wobei die wandbildenden Materialien ein vernetzendes Reagens umfassen.

11. Verfahren nach einem beliebigen der Ansprüche 8 bis 10, wobei der Katalysator ein Übergangsmetallkatalysator ist, wobei das Übergangsmetall Palladium ist.

12. Verfahren nach Anspruch 11, wobei das Palladium in Form einer durch ein organisches Lösungsmittel löslichen Form von Palladium vorliegt

13. Verfahren nach Anspruch 12, wobei das Palladium in Form von Palladiumacetat vorliegt.

14. Verfahren nach einem beliebigen der Ansprüche 8 bis 13, wobei der Ligand ein organischer Ligand der Formel (1):
PR¹R²R³ (1)
ist, wobei:
R¹, R² und R³ Jeweils voneinander unabhängig eine gegebenenfalls substituierte Hydrocarbylgruppe, eine gegebenenfalls substituierte Hydrocarbyloxygruppe oder eine gegebenenfalls substituierte Heterocyclylgruppe sind oder einer oder mehr von R¹ & R²,
R¹ & R³, R² & R³ gegebenenfalls so verbunden sind, dass sie (einen) gegebenenfalls substituierte(n) Ring(e) bilden.

15. Verfahren nach Anspruch 14, wobei der Ligand PMe₂CF₃, P(OEt)₃, P(Et)₃, P(Bu)₃, P(cyclohexyl)₃, PPhEt₂, PPh₂Me, PPh₃, P(CH₂Ph)₃, P(CH₂Ph)₂, P(*p*-tolyl)₃, P(*o*-C₆H₄OMe)₃, P(OPh)₃, P(O-*p*-tolyl)₃, P(*p-*C₆H₄OMe)₃, P(*o*-tolyl)₃, P(*m*-tolyl)₃, PMe₃, PPhMe₂, PPh₂Et, P(*i*-Pr)₃, P(*t*-Bu)₃, PPhCH₂Ph, PPh₂OEt, PPh(OEt)₂, P(O-*o*-tolyl)₃, P(OMe)₃, P(*n*-Pr)₃, PPh(*i*-Pr)₂, PPh₂(*i*-Pr), PPhBu₂, PPh₂Bu, P(*i*-Bu)₃, PPh(cyclohexyl)₂, PPh₂(cyclohexyl), P(CH₂Ph)₂Et, P(CH₂Ph)Et₂, P(C₆F₅)Ph₂, P(*p*-C₆H₄F)₃, P(*p*-C₆H₄Cl)₃, P(C₆F₅)₂Ph, P(*o*-C₆H₄F)₃, P(*o-*C₆H₄Cl)₃, P(2-furanyl)₃, P(2-thienyl)₃, P(*n*-octyl)₃, P(*p*-C₆H₄NO₂)₃, 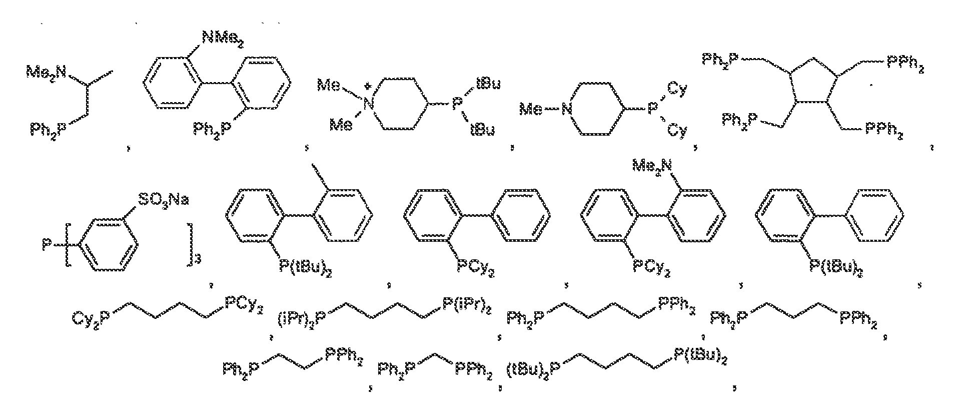 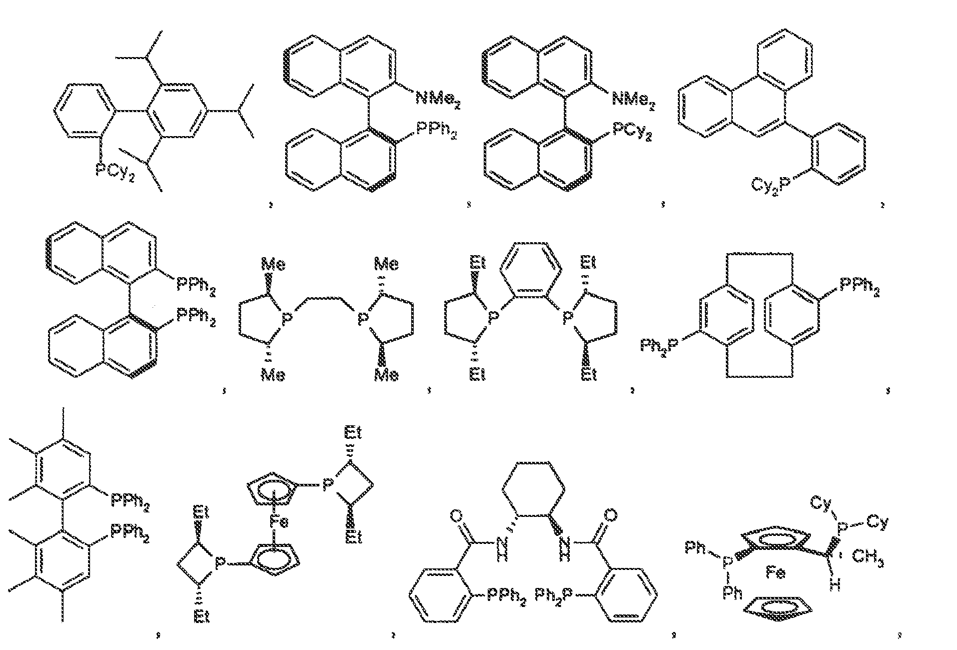 oder 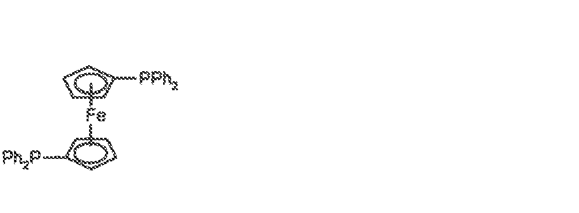 ist, wobei Cy = cyclohexyl.

## Revendications

1. Système catalyseur-ligand micro-encapsulé comprenant un catalyseur métal de transition et un ligand micro encapsulé dans une coquille microcapsule de polymère perméable, où la coquille microcapsule est formée par polymérisation inter faciale et où le ligand est encapsulé avec le catalyseur métal de transition en tant que composant de la phase organique,
**caractérisé en ce que** le métal de transition catalyseur est : platine, palladium, osmium, ruthénium, rhodium, iridium, cobalt, fer et nickel,
**en ce que** le ligand est un fragment organique comprenant un ou plusieurs atomes P,
**en ce que** la coquille microcapsule de polymère perméable est le produit d'auto-condensation et/ou de liaison croisée de résines éthérifiées urée formaldéhyde ou de pré polymères dans lesquels environ 50 à environ 98% des groupes méthyloles ont été éthérifiés avec un alcool C₄-C₁₀, ou
**en ce que** la coquille microcapsule de polymère perméable est une microcapsule poly urée préparée à partir d'au moins un polyisocyanate et/ou tolylène diisocyanate.

2. Système catalyseur-ligand micro-encapsulé selon la revendication 1, **caractérisé en ce que** lorsque la coquille microcapsule de polymère perméable est une microcapsule poly urée préparée à partir d'au moins un polyisocyanate et/ou tolylène diisocyanate, les poly isocyanates et/ou tolylène diisocyanates sont choisis parmi le groupe consistant en : 1-chloro-2,4-phénylène diisocyanate, m-phénylène diisocyanate (et son dérivé hydrogéné), p-phenylène diisocyante (et son dérivé hydrogéné), 4,4'-methylènebis (phényle isocyanate), 2,4-tolylène düsocyanate, tolylène diisocyanate (60% 2,4-isomer, 40% 2,6-isomer), 2,6-tolylène diisocyante, 3,3'-diméthyle-4,4'-bi phénylène diisocyante, 4,4'-méthylènebis (2-méthyle phényle isocyanate), 3,3'-diméthoxy-4,4'-biphénylène diisocyanate, 2,2',5,5'-tétraméthyle-4,4'-biphénylène diisocyanate, 80% 2,4- et 20% 2,6-isomère de tolylène diisocyanate, polyméthylène polyphénylisocyante (PMPPI), 1,6-hexaméthylène diisocyanate, isophorone diisocyanate, tétraméthylxylène diisocyanate et 1,5-naphthylène diisocyanate.

3. Système catalyseur-ligand micro-encapsulé selon la revendication 1 ou la revendication 2, **caractérisé en ce que** le métal de transition est du palladium.

4. Système catalyseur-ligand micro-encapsulé selon la revendication 3, **caractérisé en ce que** le palladium est sous la forme d'un solvant organique soluble de palladium.

5. Système catalyseur-ligand micro-encapsulé selon la revendication 4, **caractérisé en ce que** le palladium est sous la forme d'acétate de palladium.

6. Système catalyseur-ligand micro-encapsulé selon l'une des revendications précédentes, **caractérisé en ce que** le ligand est un ligand organique de formule (1):
PR¹R²R³ (1)
Où:
R¹, R² et R³ sont chacun indépendamment un groupe hydro carbyle optionnellement substitué, un groupe hydro carbyloxy optionnellement substitué, or un groupe optionnellement substitué hétro cyclyl ou un ou plusieurs de R¹ & R², R¹ & R³, R² & R³ étant optionnellement liés de manière à former un ou des anneau(x) optionnel(s) substitué(s).

7. Système catalyseur-ligand micro-encapsulé selon la revendication 6, **caractérisé en ce que** le ligand est PMe₂CF₃, P(OEt)₃, P(Et)₃, P(Bu)₃, P(cyclohéxyle)₃, PPhEt₂, PPh₂Me, PPh₃, P(CH₂Ph)₃, P(CH₂Ph)Ph₂, P(*p*-tolyl)₃, P(*o*-C₆H₄OMe)₃; P(OPh)₃, P(O-*p*-tolyl)₃, P(*p*-C₆H₄OMe)₃, P(*o*-tolyl)₃, P(*m*-tolyl)₃, PMe₃, PPhMe₂, PPh₂Et, P(*i*-Pr)₃, P(*t*-Bu)₃, PPhCH₂Ph, PPh₂OEt, PPh(OEt)₂, P(O-*o*-tolyl)₃, P(OMe)₃, P(*n*-Pr)₃, PPh(*i*-Pr)₂, PPh₂(*i*-Pr), PPhBu₂, PPh₂Bu, P(*i*-Bu)₃, PPh(cyclohexyl)₂, PPh₂(cyclohéxyle), P(CH₂Ph)₂Et, P(CH₂Ph)Et₂, P(C₆F₅)Ph₂, P(*p*-C₆H₄F)₃, P(*p*-C₆H₄Cl)₃, P(C₆F₅)₂Ph, P(*o*-C₆H₄F)₃, P(*o*-C₆H₄Cl)₃, P(2-furanyl)₃, P(2-thiényle)₃, P(*n*-octyl)₃, P(*p*-C₆H₄NO₂)₃, 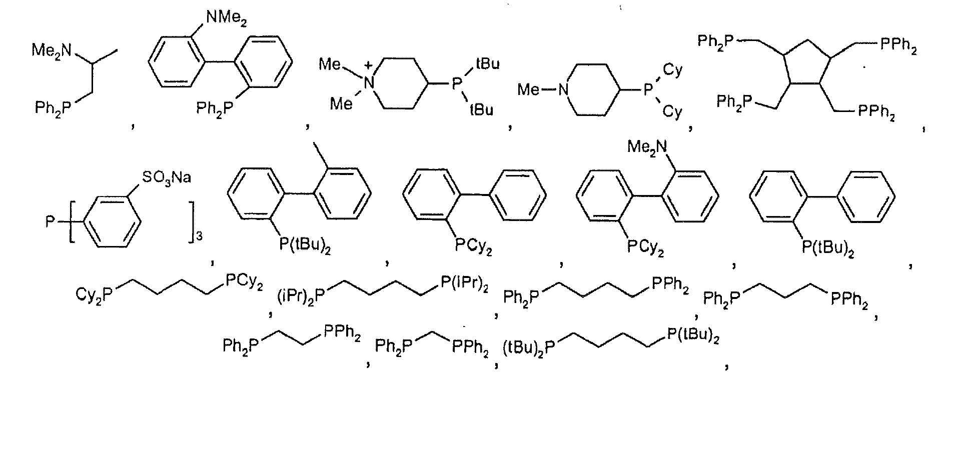 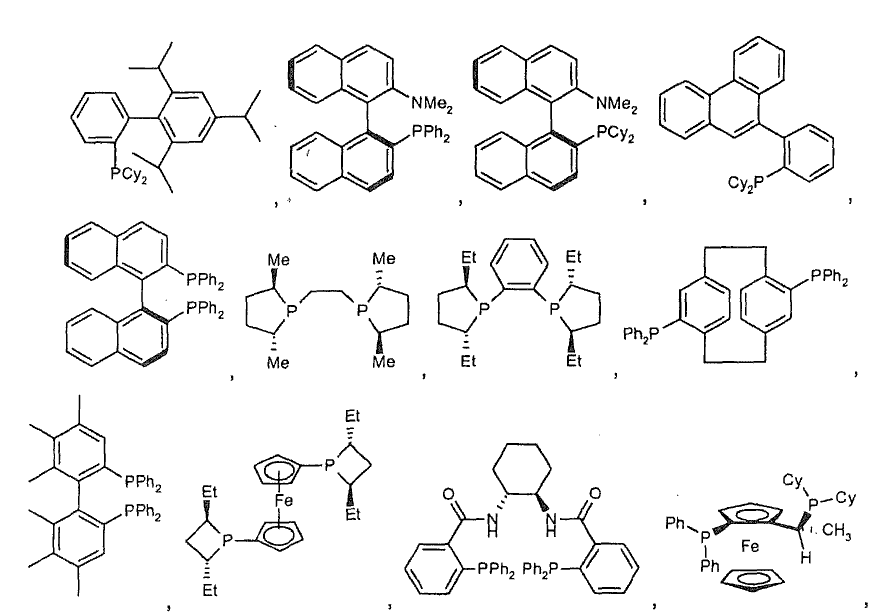 ou 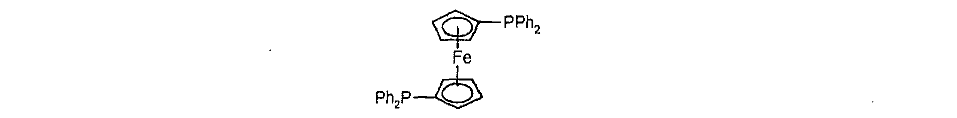 Où Cy = cyclohéxyle.

8. Procédé pour la préparation d'un système catalyseur-ligand micro-encapsulé qui comporte la formation d'une coquille microcapsule par polymérisation inter-faciale en présence d'un catalyseur métal de transition et un ligand qui, est un fragment organique comprenant un ou plusieurs atomes P, comportant :
(a) dissoudre ou disperser le catalyseur et ligand dans une première phase,
(b) disperser la première phase en une seconde phase continue pour former une émulsion, et la première phase étant une phase organique et la seconde phase continue une phase aqueuse,
(c) mettre en réaction un ou plusieurs matériaux en microcapsules formant paroi, à l'interface entre la première phase dispersée et la seconde phase continue pour former une coquille polymère microcapsule qui encapsule le noyau de la première phase dispersée ; et optionnellement
(d) récupérer les microcapsules de la phase continue,
où le métal de transition catalyseur est : platine, palladium, osmium, ruthénium, rhodium, iridium, cobalt, fer et nickel, et
les matériaux formant des parois comportent au moins un poly isocyanate et/ou tolylène di-isocyanate, ou
où les matériaux formant des parois comportent des résines éthérifiée urée-formaldéhyde ou des pré polymères dans lesquels d'environ 50 à environ 98% des groupes méthyloles ont été éthérifiés avec un alcool C₄-C₁₀.

9. Procédé selon la revendication 8, **caractérisé en ce que** lorsque la coquille microcapsule polymère perméable est une microcapsule poly urée préparée à partir d'au moins un polyisocyanate et/ou toluène diisocyanate, les polyisocyanates et/ou tolylène diisocyanates sont choisis dans le groupe consistant en : 1-chloro-2,4-phénylène diisocyanate, m-phénylène diisocyanate (et son dérivé hydrogéné), p-phénylène diisocyanate (et son dérivé hydrogéné), 4,4'-méthylènebis(phényle isocyanate), 2,4-tolylène diisocyanate, tolylène diisocyanate (60% 2,4-isomère, 40% 2,6-isomère), 2,6-tolylène diisocyanate, 3,3'-diméthyl-4,4'-biphénylène diisocyante, 4,4'-méthylènebis (2-méthylphényle isocyanate), 3,3'-diméthoxy-4,4'-biphénylène diisocyanate, 2,2',5,5'-tétraméthyle-4,4'-biphénylène diisocyanate, 80% 2,4- et 20% 2,6-isomère de tolylène diisocyanate, polyméthylène polyphénylisocyanate (PMPPI), 1,6-hexaméthylène diisocyanate, isophorone diisocyanate, tétraméthylxylène diisocyanate et 1,5-naphthylène diisocyanate.

10. Procédé selon la revendication 8 or 9, **caractérisé en ce que** les matériaux formant paroi comportent un réactif à liaison croisée.

11. Procédé selon l'une des revendications 8 à 10, **caractérisé en ce que** le catalyseur est un métal de transition catalyseur et **en ce que** le métal de transition est du palladium.

12. Procédé selon la revendication 11, **caractérisé en ce que** le palladium est sous la forme d'un solvant organique soluble de palladium.

13. Procédé selon la revendication 12, **caractérisé en ce que** le palladium est sous la forme d'acétate de palladium.

14. Procédé selon l'une des revendications 8 à 13, **caractérisé en ce que** le ligand est un ligand organique de formule (1):
PR¹R²R³ (1)
Où : R¹, R² et R³ sont chacun indépendamment un groupe hydro carbyle optionnellement substitué, un groupe hydro carbyloxy optionnellement substitué, or un groupe optionnellement substitué hétro cyclyl ou un ou plusieurs de R¹ & R², R¹ & R³, R² & R³ étant optionnellement liés de manière à former un ou des anneau(x) optionnel(s) substitué(s).

15. Procédé selon la revendication 14, **caractérisé en ce que** le ligand est PMe₂CF₃, P(OEt)₃, P(Et)₃, P(Bu)₃, P(cyclohexyl)₃, PPhEt₂, PPh₂Me, PPh₃, P(CH₂Ph)₃, P(CH₂Ph)Ph₂, P(*p*-tolyl)₃, P(*o*-C₆H₄OMe)₃, P(OPh)₃, P(O-*p*-tolyl)₃, P(*p*-C₆H₄OMe)₃, P(*o*-tolyl)₃, P(*m*-tolyl)₃, PMe₃, PPhMe₂, PPh₂Et, P(*i*-Pr)₃, P(*t*-Bu)₃, PPhCH₂Ph, PPh₂OEt, PPh(OEt)₂, P(O-*o*-tolyl)₃, P(OMe)₃, P(*n*-Pr)₃, PPh(*i*-Pr)₂, PPh₂(*i*-Pr), PPhBu₂, PPh₂Bu, P(*i*-Bu)₃, PPh(cyclohexyl)₂, PPh₂(cyclohexyl), P(CH₂Ph)₂Et, P(CH₂Ph)Et₂, P(C₆F₅)Ph₂, P(*p*-C₆H₄F)₃, P(*p*-C₆H₄Cl)₃, P(C₆F₅)₂Ph, P(*o*-C₆H₄F)₃, P(*o*-C₆H₄Cl)₃, P(2-furanyl)₃, P(2-thiényle)₃, P(*n*-octyl)₃, P(*p*-C₆H₄NO₂)₃, 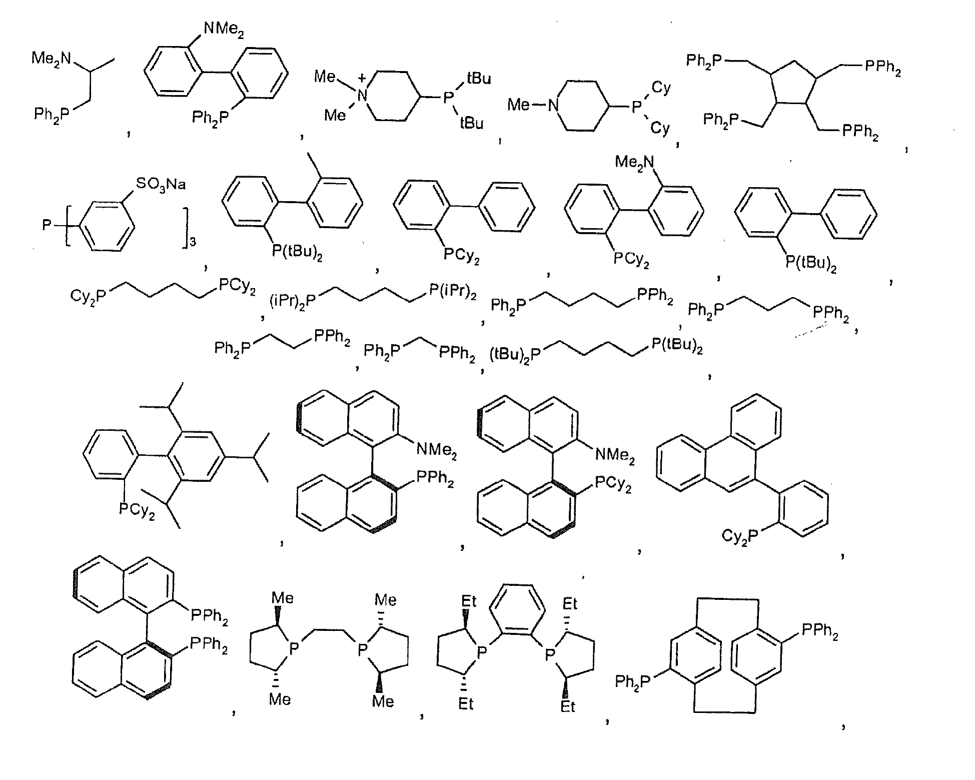 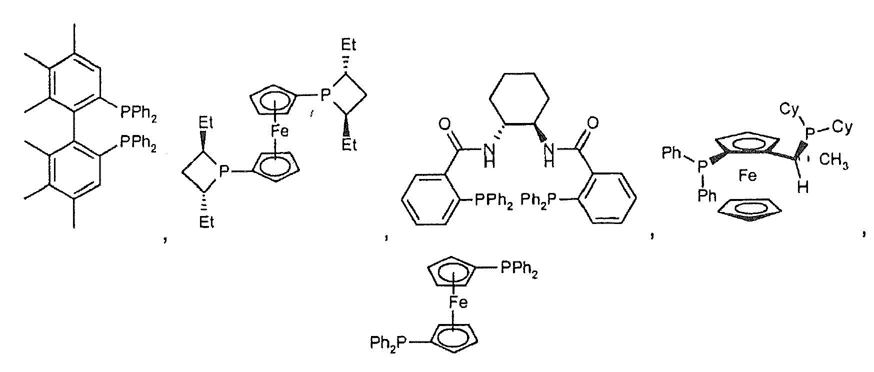 ou
Où Cy = cyclohéxyle.
